# EUROPÄISCHE PATENTSCHRIFT

(11) **EP 2 921 436 B1**
(45) Veröffentlichungstag und Bekanntmachung des Hinweises auf die Patenterteilung: **01.03.2017**
(21) Anmeldenummer: 15159574.1
(22) Anmeldetag: 18.03.2015
(51) Int. Cl.: B65G 43/08, B29C 31/00, B65G 47/244, B65G 47/84

(54) **TUBENROHR-TRANSFERSYSTEM, TUBENROHRHERSTELLUNGSVORRICHTUNG SOWIE TUBENROHRTRANSFERVERFAHREN**
TUBE BODY TRANSFER SYSTEM, TUBE BODY PRODUCTION DEVICE AND TUBE BODY TRANSFER METHOD
SYSTÈME DE TRANSFERT DE CORPS TUBULAIRE, DISPOSITIF DE FABRICATION DE CORPS TUBULAIRE ET PROCÉDÉ DE TRANSFERT DE CORPS TUBULAIRE

(30) Priorität: 21.03.2014 DE 102014103904
(43) Veröffentlichungstag der Anmeldung: 23.09.2015
(73) Patentinhaber: PackSys Global AG, 8630 Rüti ZH (CH)
(72) Erfinder: Guidarelli, Sandro, 8630 Rüti (CH); Meyer, Lukas, 8005 Zürich (CH)
(74) Vertreter: Wagner, Kilian

(56) Entgegenhaltungen:
- EP-A1- 1 739 036
- EP-A1- 2 108 604
- EP-B1- 1 472 062
- WO-A1-2010/108750
- DE-A1-102008 056 797
- US-A- 5 871 079

## Beschreibung

Die Erfindung betrifft ein Tubenrohr-Transfersystem gemäß dem Oberbegriff des Anspruchs 1, eine Tubenrohrherstellungsvorrichtung gemäß Anspruch 15 mit einem solchen Tubenrohr-Transfersystem sowie ein Verfahren zum Transferieren von Tubenrohren gemäß dem Oberbegriff des Anspruchs 16.

Bei der Verpackungstubenherstellung auf Basis von Kunststoffen, in der Regel Laminaten mit mindestens einer Barriereschicht, werden an einer Tubenherstellstation zunächst Tubenrohre produziert, indem das endlose Kunststoffsubstrat mit Hilfe von Umformmitteln um einen langgestreckten Dorn umgeformt und entlang der Längserstreckung des Dorns zu einem endlosen Rohrkörper verschweißt wird. Alternativ wird der endlose Rohrkörper durch Extrudieren, insbesondere Koextrudieren hergestellt. Der endlose Rohrkörper wird - unabhängig von der Herstellmethode - in einzelne Tubenrohre vereinzelt bzw. abgelängt, die dann mittels eines Tubenrohr-Transfersystems an eine nachgeordnete (Bearbeitungs-) Station überführt werden, an welcher die Tubenrohre im Regelfall mit Tubenschultern versehen werden.

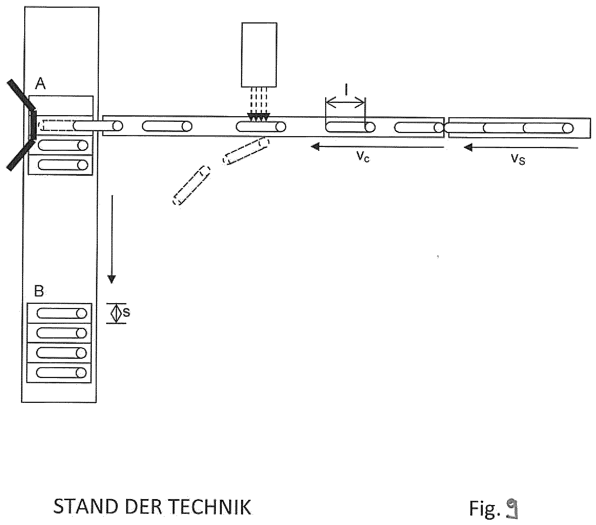

Bekannte, beispielhaft in Fig. 9 dargestellte Transfersysteme für die leicht deformierbaren Tubenrohre arbeiten mit einem Förderband, welches die von der Tubenherstellungsstation kommenden Rohre vereinzelt, indem das Förderband (anliefernde Fördereinrichtung) etwas schneller umläuft als ein in der Förderrichtung davor angeordneter Fördermechanismus. Von der anliefernden Fördereinrichtung werden die Tubenrohre dann nacheinander in Richtung ihrer Längserstreckung in zu einer Aufnahmegruppe zusammengefasste Aufnahmen einer abfördernden Fördereinrichtung überführt, wobei die Aufnahmen der Aufnahmegruppe zum Aufnehmen der vereinzelten Tubenrohre getaktet relativ zu der Übergabestelle bewegt werden müssen. Nach dem vollständigen Befüllen der Aufnahmegruppe mit der Mehrzahl von Tubenrohren wird diese zu der nachgeordneten Station transferiert, wo sämtliche Rohre gleichzeitig entnommen werden. Durch das Ändern der Transportrichtung erhöht sich die Packungsdichte der Tuben vor Eintritt in die nachgelagerte Bearbeitungsstation. Dadurch kann der dortige Transfermechanismus kompakt gestaltet werden, außerdem wird eine Reduktion der Gruppengeschwindigkeit erzielt und damit einhergehend geringere Beschleunigungen. Bei der Übergabe des Tubenrohres von der anliefernden Fördereinrichtung in die Aufnahme der Aufnahmegruppe verlässt das Tubenrohr die anliefernde Fördereinrichtung und der durch die Massenträgheit des Tubenrohres bewegte Schwung ermöglicht es dem Tubenrohr, vollständig in die Aufnahmeschale zu gelangen. Die Orientierung der Tubenrohre ist dabei kurz vor der nachgeordneten Bearbeitungsstation senkrecht zur Förderrichtung, während die Orientierung auf der anliefernden Fördereinrichtung mit der Förderrichtung zusammenfällt. Um dies zu erreichen, sind die Förderrichtungen der anliefernden Fördereinrichtung und der abliefernden Fördereinrichtung senkrecht zueinander orientiert, so dass die Tubenrohre entlang ihrer Bewegungsrichtung in jeweils eine Aufnahme der abliefernden Fördereinrichtung überführt werden können und sich die Aufnahmen dann senkrecht zu der vorgenannten Bewegungsrichtung verstellen. Bei der Übergabe stehen die Aufnahmen der abfördernden Fördereinrichtung still. Die Übergabe der flexiblen Tubenrohre von der anliefernden Fördereinrichtung auf die abliefernden Fördereinrichtung ist kritisch, einerseits weil sich die Tubenrohre über einen vergleichsweise langen Zeitraum unkontrolliert in der Förderrichtung der anliefernden Fördereinrichtung weiter in Richtung Aufnahme bewegen, andererseits weil sich das Gruppierband nach dem Beladen einer einzelnen Aufnahme ruckartig weiterbewegen muss, damit die nächste leere Aufnahme rechtzeitig in der richtigen Position zum Stehen kommt. Bei diesem Übergangsbereich kommt es daher häufig zu Störungen durch verkeilte bzw. nicht ordnungsgemäß überführte Tubenrohre. In diesem Zusammenhang besteht insbesondere das Problem von dem Stand der Technik notwendigen starken Beschleunigungen und Verzögerungen, da die Aufnahmegruppe mehrfach pro Sekunde aus einer stehenden Übergabeposition beschleunigt und danach unmittelbar wieder auf null abgebremst werden muss. Die für den Umpositionierungsprozess zur Verfügung stehende Zeit wird umso kleiner, je größer die Produktionsfrequenz ist und je kleiner die Abstände zwischen den vereinzelten Tubenrohren sind.

Aus der EP 1 472 062 B1, welche eine Tubenrohrherstellungsvorrichtung nach dem Oberbegriff des Anspruchs 15 und ein Verfahren zum Transferieren von Tubenrohren nach dem Oberbegriff des Anspruchs 16 offenbart, ist ein alternatives Tubenrohr-Transfersystem bekannt. Bei dem bekannten Tubenrohr-Transfersystem ist zwischen der anliefernden Fördereinrichtung und der abfördernden Fördereinrichtung eine Transfereinrichtung vorgesehen, die mehrere über den Umfang eines Rades verteilte Transferelemente aufweist. Die Transferelemente werden während der Rotation des Rades innerhalb der Bewegungsbahnebene relativ zum Rad gedreht. Die Rotationsbewegung der Tubenrohre relativ zu dem Rad hat den Zweck, wie auch beim bereits diskutierten Stand der Technik die Bewegungsrichtung der Tuben relativ zur Tubenlage zu verändern und somit eine höhere Packungsdichte (geringere Geschwindigkeit) zu erzielen. Die Rotationsbewegung der Tubenrohre relativ zum dem Rad ist dabei derart ausgestaltet, dass die Tubenrohre aufgrund der gleichzeitigen Drehbewegung des Rades im Raum nicht verdreht werden, sondern gezielt deren Orientierung im Raum unverändert bleibt. Die abfördernde Fördereinrichtung wiederum definiert eine Bewegungsbahn, die nicht in einer Horizontalebene liegt - vielmehr werden die Aufnahmen mit den darin befindlichen Tubenrohren umgelenkt, um dann als Gruppe in der korrekten Orientierung zur weiteren Verarbeitung entnommen werden zu können. Die bekannte Vorrichtung hat den Nachteil, dass auf die Tubenrohre sowohl beim Transport an der Transfereinrichtung als auch beim Transport mittels der abfördernden Fördereinrichtung aufgrund der diversen Umlenkungen erheblichen Fliehkrafteinflüssen ausgesetzt sind, wodurch auch hier einer Geschwindigkeitserhöhung enge Grenzen gesetzt sind. Bei Beibehaltung des Transferprinzips kann dem nur mit erheblich größeren Radien begegnet werden, was jedoch den Forderungen nach einem geringeren Bauraum zuwiderläuft.

Aus der fachfremden US 5,871,079 A ist ein Transfersystem für im Vergleich zu Tubenrohren schwere und unelastische Seifenstücke bekannt, welches eine anliefernde Fördereinrichtung, eine abfördernde Fördereinrichtung sowie eine Transfereinrichtung umfasst. Ein wesentlicher Unterschied des bekannten Transfersystems zu den hier interessierenden Tubenrohr-Transfersystemen besteht darin, dass die Seifenstücke bei dem bekannten Seifentransportsystem auf der anliefernden Fördereinrichtung äquidistant angeordnet sind. Darüber hinaus sind die Anforderungen an die Minimierung von Beschleunigungskräften und dgl. Einflüsse zur Vermeidung eines Störzustandes des Transfersystems bei Tubenrohren wesentlich höher als bei den eine große träge Masse aufweisenden Seifen. Bei dem bekannten Transfersystem werden die anliefernde Fördereinrichtung, die abfördernde Fördereinrichtung sowie die Transfereinrichtung mit unterschiedlichen, jedoch jeweils konstanten Geschwindigkeiten betrieben. Hieraus folgt, dass die Seifenstücke quasi im Flug, d.h. mit einer Relativgeschwindigkeit zwischen den Transferelementen und den Seifenstücken von den Transferelementen aufgenommen werden müssen, was aufgrund der geringen Elastizität und der großen Masse der Seifenstücke unproblematisch ist.

Aus der EP 0 711 719 A1 ist eine Fördereinrichtung bekannt, bei welcher das Transportgut mit konstanter Raumorientierung transportiert wird.

Die DE 10 2008 056 797 A1 beschreibt allgemein eine Vorrichtung sowie ein Verfahren zum Herstellen von Tuben.

Aus der EP 1 739 036, welche ein Tubenrohr-Transfersystem nach dem Oberbegriff des Anspruchs 1 offenbart, ist eine Vorrichtung zum Fördern und Drehen von Gegenständen bekannt, die zwei Transfereinrichtungen, jeweils mit mehreren Transferelementen aufweist, wobei jeder Transfereinrichtung ein Antrieb zum Antreiben der zugehörigen Transferelemente zugeordnet ist. Ein Transferelement einer der Transfereinrichtungen wartet in einer Warteposition bis ein angelieferter Gegenstand auf einer anliefernden Fördereinrichtung übernommen werden kann, während bereits ein vorhergehender Gegenstand mittels eines Transferelementes der anderen Transfereinrichtung in Richtung einer abfördernden Fördereinrichtung transportiert und dabei gedreht wird. Die abfördernde Transfereinrichtung ist als aufnahmetaschenfreies Förderband ausgestaltet.

Ausgehend von dem vorgenannten Stand der Technik liegt der Erfindung die Aufgabe zugrunde, ein Tubenrohr-Transfersystem anzugeben, bei welchem Störungen bei der Übernahme von Tubenrohren von einer anliefernden Fördereinrichtung und der Übergabe auf die abfördernde Fördereinrichtung minimiert sind. Insbesondere sollen auch die Fliehkrafteinflüsse bei einer gleichzeitigen Optimierung des Bauraums reduziert sein. Ferner besteht die Aufgabe darin, eine Tubenrohrherstellungsvorrichtung mit einem derartig optimierten Tubenrohr-Transfersystem anzugeben sowie ein entsprechend verbessertes Transferverfahren für Tubenrohre. Diese Aufgabe wird hinsichtlich des Tubenrohr-Transfersystems mit den Merkmalen des Anspruchs 1, hinsichtlich der Tubenrohrherstellungsvorrichtung mit den Merkmalen des Anspruchs 15 und hinsichtlich des Transferverfahrens mit den Merkmalen des Anspruchs 16 gelöst. Vorteilhafte Weiterbildungen der Erfindung sind in den Unteransprüchen angegeben.

In den Rahmen der Erfindung fallen sämtliche Kombinationen aus zumindest zwei von in der Beschreibung, den Ansprüchen und/oder den Figuren offenbarten Merkmalen. Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale als vorrichtungsgemäß offenbart gelten und beanspruchbar sein.

Der Erfindung liegt zunächst der Gedanke zugrunde, auf eine unmittelbare Übergabe der flexiblen, vorzugsweise aus Kunststoff ausgebildeten, weiter bevorzugt extrudierten oder durch Verschweißen von Längsrändern eines Foliensubstrates hergestellten Tubenrohrkörper von einer anliefernden auf eine abfördernde Fördereinrichtung zu verzichten und stattdessen zwischen der die Tubenrohre in Richtung ihrer Längserstreckung fördernden, anliefernden Fördereinrichtung und der abfördernden Fördereinrichtung eine Transfereinrichtung vorzusehen, die die Aufgabe hat, die von der anliefernden Fördereinrichtung angelieferten Tubenrohre, bevorzugt in einem festen Übernahmebereich, aufzunehmen, d.h. zu übernehmen und entlang eines Abschnittes einer endlosen Bewegungsbahn von Transferelementen mit Hilfe der Transferelemente zu transportieren und dann auf die abfördernde Fördereinrichtung zu übergeben. Im Gegensatz zu der aus der EP 1 472 062 B1 bekannten Transfereinrichtung zeichnet sich die nach dem Konzept der Erfindung ausgebildete Transfereinrichtung jedoch dadurch aus, dass die jeweils ein Tubenrohr aufnehmenden Transfereinrichtungen nicht oder zumindest nicht nur in einer von der Bewegungsbahn der Transferelemente definierten Ebene rotiert werden, sondern derart, dass sich die Orientierung einer jeweiligen, von jeweils einem Transferelement definierten Aufnahmeachse, die bei der Beladung mit einem Tubenrohr mit der Tubenrohrlängsachse zusammenfällt, im Raum verändert. Hierdurch wird das Tubenrohr mit einer gegenüber der Orientierung des Tubenrohrs auf der anliefernden Fördereinrichtung unterschiedlichen, vorzugsweise um 90° veränderten Orientierung auf die abfördernde Fördereinrichtung übergeben, die hierdurch keine Rotationsmittel mehr aufweisen und auch nicht wie im Stand der Technik eine Umlenkung realisieren muss, sondern eine horizontale Bewegungsbahn vorgeben bzw. definieren kann. Insgesamt können durch die erfindungsgemäße Ausgestaltung der Transfereinrichtung die Fliehkrafteinflüsse minimiert werden, insbesondere dann, wenn, was in Weiterbildung der Erfindung mit Vorteil vorgesehen ist, die Rotationsachse etwa mittig durch das Tubenrohr verläuft und bevorzugt gleichzeitig senkrecht zur Längsachse des Tubenrohres. Anders ausgedrückt wird entgegen der Lehre der EP 1 472 062 B1 gerade nicht die Orientierung der Tubenrohrlängserstreckung im Raum beibehalten, sondern gezielt verändert, insbesondere derart, dass die von der anliefernden Fördereinrichtung parallel zu Forderrichtung angelieferten Tubenrohre im Bereich der nachgeordneten Station winklig, bevorzugt senkrecht zur Transportrichtung der Tubenrohre auf der abfördernden Fördereinrichtung orientiert von dieser entnehmbar sind, ohne dass es weiterer Rotationsmittel an der abfördernden Fördereinrichtung bedarf bzw. eine Drehbewegung auf die abfördernde Fördereinrichtung realisiert werden muss. Durch das Verändern der Orientierung der Tubenrohrlängsachse im Raum können die Tubenrohre platzsparend auf der abfördernden Fördereinrichtung aufgenommen werden, so dass die abfördernde Fördereinrichtung mit einer geringeren Transportgeschwindigkeit betrieben werden kann.

Die Transferelemente halten bevorzugt die Tubenrohre mittels geeigneter Haltemittel beispielsweise mittels Unterdruck und/oder durch einen mechanischen Greifer, während des Transports entlang der Bewegungsbahn sowie während der Rotation fest und sorgen somit für einen definierten Zustand, so dass insgesamt eine mögliche unkontrollierte bzw. nicht geführte Übergabezeit zur einzelnen Übergabe der Tubenrohre auf die abfördernde Fördereinrichtung minimiert werden kann.

Ein weiteres wesentliches Merkmal der nach dem Konzept der Erfindung ausgebildeten Tubenrohr-Transfervorrichtung besteht darin, dass die Geschwindigkeit, mit der sich die Transferelemente entlang der Bewegungsbahn bewegen, variierbar ist durch eine entsprechende Ansteuerung eines gemeinsamen Antriebs der Transferelemente über Steuermittel.

Auf diese Weise ist es, wie später noch erläutert werden wird möglich, die Geschwindigkeit der Transferelemente an die Geschwindigkeit der anliefernden Fördereinrichtung anzupassen bzw. in Abhängigkeit von dieser zu ändern, bevorzugt mit dieser zu synchronisieren, um somit einen besonders "weichen" Übernahmevorgang von der anliefernden Fördereinrichtung auf die Transferelemente zu ermöglichen.

Aufgrund der Besonderheit der Tubenrohrfertigung bzw. der Übernahme der von einem endlosen, insbesondere geschweißten Tubenrohr abgelängten Tubenrohre auf die anliefernde Fördereinrichtung der erfindungsgemäßen Tubenrohr-Transfervorrichtung sind die Abstände jeweils hintereinander auf der anliefernden Fördereinrichtung transportierter Tubenrohre nicht gleich, d.h. nicht äquidistant. In der Praxis schwankt dieser Abstand um teilweise mehrere Zentimeter bezogen auf einen optimalen bzw. gewünschten Soll-Abstand. Anders ausgedrückt variiert die Größe der Lücke (Abstand) zwischen benachbarten Tubenrohren vom Tubenrohrpaar zu Tubenrohrpaar. Dies ist darauf zurückzuführen, dass die Tubenrohre nach dem Ablängen in der Regel vom jeweils nachkommenden Tubenrohr auf die, bevorzugt als Förderband ausgebildete anliefernde Fördereinrichtung aufgeschoben werden und der konkrete Mitnahmezeitpunkt, ab dem sich das jeweilige Tubenrohr mit der anliefernden Fördereinrichtungsgeschwindigkeit, insbesondere der Förderbandgeschwindigkeit mitbewegt nicht exakt definiert ist. Dies führt dazu, dass die hintereinander auf der anliefernden Fördereinrichtung transportierten und in der Praxis um bis zu mehrere Zentimeter unterschiedlich beabstandeten Tubenrohre nicht in gleichen Zeitabständen bzw. mit der gleichen Anlieferfrequenz einen Übernahmebereich (vorzugsweise in einem Endbereich der anliefernden Fördereinrichtung) erreichen. Das Problem wird dadurch noch weiter erschwert, dass zwar bevorzugt die Geschwindigkeit der anliefernden Fördereinrichtung und damit der Tubenrohre konstant ist, es in der Praxis jedoch, beispielsweise aufgrund eines auftretenden Schlupfes zu Geschwindigkeitsvariationen kommt. Solche Geschwindigkeitsveränderungen treten insbesondere auch beim Anfahren oder Abstellen der Gesamtanlage auf, oder wenn aufgrund von besonderen Gegebenheiten die vorgelagerte Tubenrohrherstellung beschleunigt oder verlangsamt wird. Wie bereits angedeutet sollen mit dem erfindungsgemäßen Tubenrohr-Transportsystem starke bzw. plötzliche Beschleunigungen, insbesondere während einer besonders kritischen Übernahme zwischen der anliefernden Fördereinrichtung und der Transfereinrichtung möglichst vermieden werden, da die sehr leichten und elastischen Tubenrohre, in der Regel aus dünnem Kunststofflaminatmaterial bei den in der Praxis realisierten Durchsätzen nur schwer bis nicht kontrollierbar sind und es in der Folge zu Störungen im Betriebsablauf kommt.

Erfindungsgemäß ist daher vorgesehen, dass eine etwaige nicht äquidistante Beabstandung der Tubenrohre auf der Fördereinrichtung durch eine entsprechende, intelligente Ansteuerung des gemeinsamen Antriebs der Transferelemente ausgeglichen wird, derart, dass das nächst freie bzw. den Übernahmebereich als nächstes erreichende Transferelement mit der Bewegung des zugehörigen bzw. übernehmenden Tubenrohres auf der anliefernden Fördereinrichtung synchronisiert wird, derart, dass sich das vorgenannte Transferelement im Übernahmebereich zu einem Übernahmezeitpunkt mit dem zu übernehmenden Tubenrohr (mit der gleichen Geschwindigkeit in der gleichen Richtung) bewegt, was aufgrund der Kopplung der Transferelemente zur Folge hat, dass zu dem vorgenannten Übernahmezeitpunkt sämtliche gekoppelten Transferelemente mit der Geschwindigkeit des zu übernehmenden, insbesondere im Hinblick auf die Längserstreckung der anliefernden Fördereinrichtung vordersten Tubenrohres bewegt werden. Aufgrund dieser geschickten Steuerung des gemeinsamen Antriebs der Transferelemente wird gewährleistet, dass Geschwindigkeitssprünge bei der kritischen Übernahme der Tubenrohre auf die Transferelemente von der anliefernden Fördereinrichtung auf die Transfereinrichtung vermieden werden.

Wesentlich dabei ist, dass die vorstehend erläuterte Synchronisation der Transferelemente mit der Position und der Geschwindigkeit des als nächstes zu übernehmenden Tubenrohres immer erst dann erfolgt, wenn das vorhergehende Tubenrohr von dem vorhergehenden Transferelement (sicher) übernommen wurde. Anders ausgedrückt steht für die Synchronisation nur die Zeitspanne von einer vorhergehenden Übernahme eines Tubenrohres bis zum Erreichen des Übernahmebereichs durch das als nächstes zu übernehmende Tubenrohr zu Verfügung.

Um den gemeinsamen Antrieb der Transferelemente wie zuvor beschrieben zum Ausgleich bzw. zur Kompensation einer nicht äquidistanten Beabstandung der Tubenrohre auf der anliefernden Fördereinrichtung ansteuern, d.h. beschleunigen und/oder verlangsamen zu können, um somit eine gemeinsame, insbesondere parallele Bewegung der übernehmenden Transferelemente mit dem zu Übernehmenden der Tubenrohre zu gewährleisten, wird weiterbildungsgemäß mit Hilfe geeigneter Positionsensormittel der Zeitpunkt des Erreichens einer vorgegebenen Position durch jedes Tubenrohr entlang der anliefernden Fördereinrichtung erfasst. Ander ausgedrückt wird detektiert, wann jedes Tubenrohr eine bestimmte Position entlang der Förderrichtung der anliefernden Fördereinrichtung erreicht, wobei der Abstand dieser Position zum Übernahmebereich bekannt ist. Noch anders ausgedrückt wird also eine Zeitinformation bezüglich jedes Tubenrohres gewonnen, die wiederspiegelt, dass bzw. wann ein jeweilges Tubenrohr eine vorgegebene Förderposition entlang der anliefernden Fördereinrichtung erreicht hat.

Unter zusätzlicher Beachtung bzw. Berücksichtigung einer später noch zu erläuternden und auf unterschiedliche Weise erfassbaren Geschwindigkeitsinformation zu dem (insbesondere jeweiligen) Tubenrohr kann mit Hilfe der Steuermittel ein Zeitpunkt errechnet werden, zu welchem sich ein zu übernehmendes Tubenrohr im Übernahmebereich befindet bzw. befinden wird. Da den Steuermitteln zusätzlich die Position und die Geschwindigkeit der Transferelemente bekannt ist (beispielsweise aufgrund entsprechender Drehgeberinformationen und/oder Positionssensorinformationen), können diese die Geschwindigkeit der Transferelemente in Abhängigkeit des errechneten Anwesenheitszeitpunkts des zu übernehmenden Tubenrohres im Übernahmebereich die Geschwindigkeit der Transferelemente durch Ansteuerung des gemeinsamen Antriebs so variieren, insbesondere beschleunigen und/oder verzögern, dass das nächste bzw. übernehmende Transferelement sich zur selben Zeit wie das zu übernehmende Tubenrohr im Übernahmebereich befindet und mit der gleichen Geschwindigkeit wie das Tubenrohr (bevorzugt parallel zum Tubenrohr) bewegt wird.

Wie erwähnt, kann die Geschwindigkeitsinformation zum jeweiligen Tubenrohr auf unterschiedliche Weise erfasst werden. Besonders bevorzugt ist es, wenn die Steuermittel die Geschwindigkeitsinformation auf Basis eines Drehgebersignals, insbesondere eines Antriebs der anliefernden Fördereinrichtung erhalten oder selbst ermitteln. Dem liegt die Überlegung zugrunde, dass eine Drehzahl des Antriebs direkt proportional ist zur Geschwindigkeit der anliefernden Fördereinrichtung, insbesondere eines Bandes der anliefernden Fördereinrichtung und diese wiederum der Geschwindigkeit des jeweiligen Tubenrohres entspricht. Selbstverständlich ist es auch denkbar Geschwindigkeiten über beabstandete Lichtschranken und Zeitmessungen zu erfassen oder durch sonstige Geschwindigkeitssensoren, beispielsweise laserbasierte Geschwindigkeitsmessungen. Wesentlich ist lediglich, dass sowohl zu einem jeweiligen Tubenrohr eine Geschwindigkeitsinformation vorliegt sowie eine, beispielsweise mittels einer Lichtschranke erfasste Positionsinformation, um so in Kenntnis des Abstandes der Positionssensierung vom Übernahmebereich bzw. des Zeitpunkts des Durchlaufens der Positionssensormittel und der Geschwindigkeitsinformation der Übernahmezeitpunkt, zu welchem sich das Tubenrohr im Übernahmebereich befindet, errechnet werden kann, um auf dieser Basis den gemeinsamen Antrieb der Transferelemente anzusteuern.

Grundsätzlich ist es, bei über einen ausreichend langen Zeitraum als konstant unterstellten Tubenrohrgeschwindigkeit bzw. konstanten Geschwindigkeit der anliefernden Fördereinrichtung möglich, den Übernahmezeitpunkt auf Basis nur einer Geschwindigkeitsinformation zu berechnen. Bevorzugt ist es jedoch, wenn mehrfach, insbesondere fortlaufend Geschwindigkeitsinformationen bezüglich der Tubenrohre, beispielsweise über den vorerwähnten Drehgeber des Antriebs der anliefernden Fördereinrichtung erfasst und bei der Berechnung des Übernahmezeitpunktes berücksichtigt werden, wodurch etwaige Geschwindigkeitsschwankungen besser berücksichtigt und die Transferelementgeschwindigkeit durch eine entsprechende Ansteuerung des gemeinsamen Antriebs optimal hieran angepasst werden kann, mit dem Ziel der Bewegung des übernehmenden Transferelementes mit der gleichen Geschwindigkeit wie die Geschwindigkeit des zu übernehmenden Tubenrohres während der eigentlichen Übernahme zum Übernahmezeitpunkt.

Darüber hinaus bietet das Vorsehen der Transfereinrichtung, wie später noch erläutert werden wird, viele Möglichkeiten zur vorteilhaften Ausgestaltung des Erfindungsgegenstandes, beispielsweise dahingehend, dass die Aufnahme der abfördernden Fördereinrichtung während der Übergabe der Tubenrohre von der Transfervorrichtung in Förderrichtung der Transfereinrichtung mitbewegt werden, um somit die Differenzgeschwindigkeit und damit Fehlübergabewahrscheinlichkeit weiter zu minimieren.

Erfindungsgemäß ist vorgesehen, vorzugsweise in Kombination mit an der Transfereinrichtung vorgesehenen Rotationsmitteln, dass die Transfereinrichtung für die Tubenrohre, bevorzugt ortsfeste, Abstreifermittel umfasst, die die Tubenrohre von den Transferelementen in Richtung einer aufnehmenden Aufnahme der abfördernden Fördereinrichtung abstreifen. Dabei sind die Abstreifermittel bevorzugt in Förderrichtung gekrümmt oder schräg ausgebildet, um somit einen möglichst sanften Übergang zu gewährleisten. Anders ausgedrückt erfolgt keine unmittelbare Umlenkung um 90°, sondern eine geführte Bewegung entlang eines gekrümmten und/oder schrägen Übergabeweges.

Bevorzugt sind die Abstreifermittel so ausgeformt, dass sich die Geschwindigkeitskomponente der Tubenrohre parallel zur Bewegungsrichtung der Aufnahmen der abfördernden Fördereinrichtung während der Übergabe, insbesondere einer Horizontalgeschwindigkeitskomponente reduziert, insbesondere auf zumindest näherungsweise die Geschwindigkeit der Aufnahmen in diese Richtung während der Übergabe, wobei diese Aufnahmengeschwindigkeit, wie bereits erläutert bevorzugt in einem festen Verhältnis steht zur Geschwindigkeit der Transferelemente während des Tubenrohrtransportes.

Wie erläutert, umfasst die Transfervorrichtung eine Mehrzahl der vorgenannten Transferelemente, die zur jeweiligen Aufnahme eines einzigen Tubenrohrs ausgebildet und angeordnet bzw. angesteuert sind, wobei die Transferelemente in einer gemeinsamen, gekoppelten Bewegung entlang der endlosen Bewegungsbahn gefördert werden und wobei die Tubenrohre nur über einen Teil dieser Bewegungsbahn, insbesondere nur über einen geradlinigen Abschnitt, mittransportiert werden. Die gekoppelte Bewegung der Transferelemente kann auf unterschiedliche Weise realisiert werden - bevorzugt ist es, die Mehrzahl von Transferelementen über eine endlose, d.h. umlaufende Kette oder ein endloses, d.h. umlaufendes Band miteinander zu verbinden, welche bzw. welches dann mit einem gemeinsamen Antrieb angetrieben wird und so die Transferelemente entlang der endlosen Bewegungsbahn transportiert. Die Kette oder das umlaufende Band laufen dabei um mindestens zwei rotierbare Räder um, die jeweils eine Drehachse aufweisen. Bevorzugt erstreckt sich die Rotationsachse dabei senkrecht zu diesen parallelen Drehachsen und liegt gleichzeitig in der von der Bewegungsbahn der Transferelemente definierten Ebene oder einer Parallelebene hierzu. Bevorzugt verändert sich die Relativposition der Rotationsachse zu den Kopplungsmitteln, d.h. deren endlosem Band oder der endlosen Kette nicht, d.h. diese Relativposition bleibt konstant.

Alternativ ist es auch möglich, die Transferelemente auf einem umlaufenden Rad anzuordnen, wobei sich dann die Rotationsachse bevorzugt in radialer Richtung bezogen auf die Drehachse des Rades erstreckt. Das Vorsehen eines Rades hat jedoch im Vergleich zu einer umlaufenden Kette oder einem umlaufenden Band den Nachteil, dass die Transferelemente während der Rotationsbewegung nicht geradlinig, d.h. translatorisch bewegt werden, sondern sich mit dem Rad in Umfangsrichtung drehen.

Im Hinblick auf eine möglichst einfach ausgestalte Regelung des gemeinsamen Antriebsmotors für die Transferelemente ist es bevorzugt, dass letztere äquidistant entlang der gemeinsamen Bewegungsbahn angeordnet sind.

Wie später noch erläutert werden wird, gibt es hinsichtlich der Realisierung der Übergabe der Tubenrohre von den Transferelementen der Transfereinrichtung auf die Aufnahmen der abfördernden Fördereinrichtung unterschiedliche Möglichkeiten. So ist es denkbar und bevorzugt, wenn die Aufnahmen, zumindest während der Übergabe, in eine gemeinsame Richtung mit dem übergebenden Transferelement, d.h. parallel hierzu bewegt werden, wobei die Übergabe entweder immer an einer bestimmten, d.h. stationären (festen) Position erfolgen kann oder aber alternativ die Übergabeposition variieren kann, in dem die Aufnahmen die Tubenrohre an der individuell für den Gesamtablauf optimierten Position in Empfang nehmen.

Im Hinblick auf die konkrete Anordnung bzw. Positionierung der Rotationsmittel gibt es unterschiedliche Möglichkeiten. Bevorzugt sind die Rotationsmittel jedenfalls so auf einem Transferelement der Transfereinrichtung angeordnet, dass die Tubenrohre während des Transportes gedreht werden können, wodurch ein abrupter Richtungswechsel um 90°, bzw. ein Wechsel der Transportrichtung, insbesondere ein Wechsel der Transportrichtung um 90°, wie dies im Stand der Technik der Fall ist, vermieden wird. Besonders zweckmäßig ist es dabei, die Rotationsmittel an den Transferelementen der Transfereinrichtung vorzusehen, so dass die an der jeweiligen Transfereinrichtung gehaltenen Tubenrohre, insbesondere während des Verstellens des jeweiligen Transferelementes entlang der endlosen Bewegungsbahn rotiert werden können.

Bevorzugt ist es dabei, wenn bei einer derartigen Ausführung eine Rotationsachse der Rotationsmittel nicht nur senkrecht zur Längserstreckung der Tubenrohre orientiert ist, sondern senkrecht zur Umfangserstreckung der endlosen Bewegungsbahn bzw. in der Bewegungsbahnebene der Transferelemente liegt, um die Tubenrohre innerhalb einer Horizontalebene um 90° zu verdrehen.

Im Hinblick auf die konkrete Ausbildung der Rotationsmittel zum Rotieren der Tubenrohre gibt es unterschiedliche Möglichkeiten. So ist es beispielsweise denkbar an jedem Transportelement einen entsprechenden, beispielsweise elektromotorischen Rotationsantrieb vorzusehen, um die Tubenrohre, vorzugsweise zusammen mit entsprechenden Abstützelementen zu rotieren. Die Rotationsachse wird in diesem Fall von der Motorwelle oder einer fakultativen Getriebewelle definiert.

Alternativ ist es möglich, bevorzugt an den Transferelementen, jeweils nur ein Drehlager vorzusehen, welches die gewünschte Rotation der Tubenrohre zulässt, wobei die Aktuierung der Rotation von außen erfolgt, insbesondere über eine entlang eines Bewegungsabschnittes der Aufnahmen oder Transportelemente angeordneten Kurve, die mechanisch mittelbar oder unmittelbar mit den Drehgelenken zusammenwirkt dergestalt, dass die Vorwärtsbewegung der Aufnahmen bzw. Transportelemente (zum Teil) in einer Rotationsbewegung des jeweiligen Tubenrohres umgewandelt wird.

Auch ist es möglich, außerhalb der Transportelemente, insbesondere im Bereich der jeweiligen Bewegungsbahn einen aktiven Antrieb zum Verdrehen der Tubenrohre auf den passierenden Transportelementen vorzusehen, der von außen aktiv mittelbar oder unmittelbar auf das jeweils vorbeibewegte Tubenrohr einwirkt und dieses um das vorgenannte Drehgelenk dem zugehörigen Transportelement verdreht.

Unabhängig von der konkreten Realisierung der Rotationsmittel ist es bevorzugt, wenn die gedachte Rotationsachse das Tubenrohr, vorzugsweise mittig durchsetzt. Ganz besonders bevorzugt verläuft die Rotationsachse durch den Tubenrohrschwerpunkt.

Weiterbildungsgemäß ist mit Vorteil vorgesehen, dass eine die Aufnahmeachse aufnehmende und senkrecht zur Rotationsachse ausgerichtete Rotationsebene, ganz besonders bevorzugt eine Horizontalebene oder alternativ eine Vertikalebene, senkrecht zu einer die Bewegungsbahn aufnehmenden Ebene, insbesondere einer Vertikalebene bzw. einer Horizontalebene angeordnet ist. Unter der Bewegungsbahn ist dabei die Bahn der Transferelemente zu verstehen, insbesondere eine von einer Kette oder einem umlaufenden Band oder alternativ einem Rad vorgegebene Bahn.

Besonders bevorzugt ist eine Ausführungsform des Tubenrohr-Transfersystems, bei der die Rotation der Transferelemente mit dem jeweils daran angeordneten Tubenrohr zumindest abschnittsweise, vorzugsweise vollständig während eines translatorischen Bewegungsabschnittes der Transferelemente realisiert ist, dass also eine feste oder variable Übernahmeposition zur Übernahme der Tubenrohre von der anliefernden Fördereinrichtung und eine Übergabeposition, an der die Tubenrohre das jeweilige Transferelement wieder verlassen über einen geradlinigen Bewegungsbahnabschnitt verbunden sind.

Besonders zweckmäßig ist eine Ausführungsvariante, bei der die Steuermittel die abfördernde Fördereinrichtung so ansteuernd ausgebildet sind, dass mindestens eine leere Aufnahme zur Übergabe eines Tubenrohres von einem Transferelement der Transfervorrichtung während der Übergabe bewegt wird, bevorzugt parallel zur Bewegungsrichtung des übergebenden der Transferelemente, um so eine vergleichsweise ruckfreie Übergabe zu ermöglichen.

Bevorzugt bewegen sich die Aufnahmen der abfördernden Fördereinrichtung und die Transferelemente der Transfereinrichtung im störungsfreien, d.h. tubenlückenfreien Zustand in einem festen Geschwindigkeitsverhältnis. Die Geschwindigkeit der Aufnahmen der abfördernden Fördereinrichtung ist aufgrund der Packungsdichte der Tuben verglichen mit der Packungsdichte der Tuben auf der Transfereinrichtung niedriger als die Geschwindigkeit der Transferelemente entlang von deren Bewegungsbahn. Für den Fall, dass die Transferelementgeschwindigkeit durch eine geeignete Ansteuerung des gemeinsamen Antriebs reduziert wird, beispielsweise um einen größeren Abstand von Tubenrohren auf der anliefernden Fördereinrichtung auszugleichen, verändert sich die Fördergeschwindigkeit der abfördernden Fördereinrichtung entsprechend, wobei bevorzugt das Geschwindigkeitsverhältnis zur Geschwindigkeit der Transfereinrichtung gleich bleibt. Für den Fall, dass auf der Transfereinrichtung Tubenrohrlücken auftreten, kann die Geschwindigkeit der Aufnahmen der abfördernden Fördereinrichtung, ggf. bis auf null reduziert werden. Die Aufnahmen werden dann kurz vor der Übergabe wieder beschleunigt, vorzugsweise auf die in dem festen Verhältnis zur Geschwindigkeit der Transferelemente stehende Geschwindigkeit. Dadurch, dass die Aufnahmen der abfördernden Fördereinrichtung, ggf. bis auf eine Geschwindigkeit von null verzögert werden, kann auf besonders einfach Weise eine sogenannte Lückenfüllfunktion realisiert werden, so dass eine Aufnahme erst in Richtung nachfolgender Bearbeitungsstationen weiterbewegt wird, wenn diese mit einem Tubenrohr gefüllt ist. Die entsprechende Detektion von Lücken im Tubenrohrstrom kann über eine an sich bekannte, signalleitend mit den Steuermitteln verbundene Sensorik realisiert werden, wobei bevorzugt das Sensorsignal der bereits erläuterten Positionssensormittel entsprechend erweitert ausgewertet wird, wodurch kein zusätzlicher Sensor vorgesehen werden muss.

Bei dem erfindungsgemäßen Tubenrohr-Transfersystem wird, wie vorstehend erläutert, also die Lückenfüllfunktion bevorzugt von der abfördernden Fördereinrichtung übernommen, was aus mindestens zwei Gründen von Vorteil ist. Da die Packungsdichte, d.h. der Abstand der (gedrehten) Tubenrohre in der abfördernden Fördereinrichtung geringer ist als auf der Transfereinrichtung bewegt sich die abfördernde Fördereinrichtung mit einer geringeren Geschwindigkeit als die Transferelemente entlang von deren Bewegungsbahn, wodurch Geschwindigkeitsänderungen aufgrund einer Anpassung an eine sich ändernde Geschwindigkeit der Transferelemente geringer sind und somit die auf die Transferelemente entfallenden Beschleunigungs- bzw. Verzögerungskräfte weniger groß sind. Darüber hinaus werden die Tubenrohre auf der abfördernden Fördereinrichtung bevorzugt in Halteschalen transportiert, die zusätzlich dafür Sorge tragen, dass die in der abfördernden Fördereinrichtung positionierten Tubenrohre nicht herausfallen.

Wie eingangs bereits angedeutet, ist es besonders vorteilhaft, wenn die Transferelemente Haltemittel zum zeitweisen Halten bzw. Fixieren der Tubenrohre während des Transports entlang der Bewegungsbahn aufweisen. Grundsätzlich ist es denkbar, hierzu mechanische Halteelemente, beispielsweise in der Art von Halteklammern vorzusehen, wobei es jedoch besonders bevorzugt ist, insbesondere alternativ zu der vorgeschlagenen Variante Mittel zur Unterdruckbeaufschlagung vorzusehen, um die Tubenrohre saugend an den Transferelementen während des Transports zu halten.

Um eine besonders "weiche" Übergabe zu gewährleisten ist es vorteilhaft, wenn die Mittel zur Unterbrechung oder Reduzierung der Unterdruckbeaufschlagung bei der Übergabe der Tubenrohre auf die abfördernde Fördereinrichtung vorgesehen sind, so dass die Unterdruckbeaufschlagung unterbrochen, besonders jedoch reduziert wird, um somit eine schnelle Übergabe auf eine Aufnahme der abfördernden Fördereinrichtung zu ermöglichen.

Bevorzugt liegen die Tubenrohre während des Transports auf den Transportelementen auf Abstützmitteln auf. Im Falle der Integration der vorerwähnten Rotationsmittel in die Transportelemente ist es bevorzugt, wenn die Haltemittel Teil der Rotationsmittel sind, sich also um die Rotationsachse drehen lassen, damit das jeweilige Tubenrohr bei der Rotation ausreichend abgestützt ist, bevorzugt wird das Tubenrohr während der Verdrehbewegung mit den vorerwähnten Haltemitteln gehalten, bevorzugt durch Unterdruckbeaufschlagung.

In Weiterbildung der Erfindung ist mit Vorteil vorgesehen, dass die Übergabe der Tubenrohre von der Transfereinrichtung auf die abfördernde Fördereinrichtung saug- und/oder druckluftunterstützt ist, indem die Tubenrohre in Richtung abfördernder Fördereinrichtung angesaugt und/oder aus Richtung Fördereinrichtung druckluftbeaufschlagt sind, um somit eine möglichst definierte und kurze Übergabe zu gewährleisten.

Besonders bevorzugt ist eine Ausführungsvariante, bei der die anliefernde Fördereinrichtung von den Steuermitteln so ansteuerbar ist, dass diese zur Vereinzelung der Tubenrohre mit einer höheren Geschwindigkeit betrieben wird, als eine in Förderrichtung unmittelbar davor angeordnete Fördereinrichtung, die die zuvor von einem endlosen Tubenrohr abgelängten Tubenrohre von der Tubenherstellstation fördert. Bevorzugt ist eine Ausführungsform, bei der, wie bereits angedeutet, Tubenrohr nach Tubenrohr von dem jeweils nachfolgenden Tubenrohr aus einer Tubenrohrherstellungsvorrichtung auf die vorzugsweise als Förderband ausgebildete anliefernde Fördereinrichtung aufgeschoben wird. Bevorzugt weist die anliefernde Fördereinrichtung keine Mittel zur äquidistanten Beabstandung, wie Schieber od.dgl. - aufgrund der erfindungsgemäßen Ansteuerung des gemeinsamen Antriebs der Transferelemente kann auf eine solche Technologie mit Vorteil verzichtet werden.

Besonders zweckmäßig ist es dabei, wenn in Weiterbildung der Erfindung der anliefernden Fördereinrichtung eine Ausblaseinrichtung zugeordnet ist, um die dann bereits vereinzelten Tubenrohre bei Mängelbehaftung aus dem weiteren Transportprozess ausblasen zu können. Geschieht dies, entsteht auf der anliefernden Fördereinrichtung eine Lücke, auf die die Transfereinrichtung durch Variation, in diesem Fall Reduzierung der Geschwindigkeit durch eine entsprechende Ansteuerung des Antriebsmittels der Steuermittel reagieren kann bzw. reagiert. Alternativ wird die Lücke wie bereits oben beschrieben auf der abführenden Fördereinrichtung geschlossen, indem die abfördernde Fördereinrichtung angehalten wird und somit ein leeres Transportelement passieren lässt. Auch kann eine Lücke im nachfolgenden Prozess gefüllt werden.

Im Hinblick auf die konkrete Ausgestaltung der abfördernden Fördereinrichtung gibt es unterschiedliche Möglichkeiten. Wesentlich ist, dass diese eine gemeinsame Bereitstellung von zu einer Gruppe gruppierten Tubenrohren an der nachgeordneten Station ermöglicht, um die Gruppe von Tubenrohren gemeinsam entnehmen zu können. Eine Gruppe von Aufnahmen bzw. gleichzeitig zu übergebenden Tubenrohren an der nachgeordneten Station umfasst bevorzugt zwei bis vierundzwanzig oder mehr Tubenrohre. Aufgrund des Vorsehens der Transfereinrichtung ist es möglich, Fördereinrichtungen einzusetzen, die bereits zu Gruppen gruppierte Aufnahmen aufweist, d.h. Aufnahmen, die dauerhaft in einem Gruppenverbund angeordnet sind, und als Gruppe gemeinsam bewegt werden. Bevorzugt sind mindestens zwei solcher Aufnahmegruppen vorgesehen, die unabhängig voneinander verstellbar sind. Realisiert werden kann dies beispielsweise, indem jede Gruppe von Aufnahmen auf einem eigenen Band bzw. einer eigenen Kette endlos umlaufend entlang einer Bewegungsbahn angeordnet ist. Bevorzugt werden die Aufnahmen während des Tubenrohrtransportes ausschließlich in einer Ebene, bevorzugt in einer Horizontalebene, bewegt.

Alternativ ist es möglich, auf der abfördernden Fördereinrichtung noch keine optische Trennung der einzelnen Gruppen vorzunehmen, sondern die optisch sichtbare Gruppierung durch Entnahme einer entsprechenden Gruppe von der abfördernden Fördereinrichtung zu gestalten, beispielsweise mittels eines Greifers, der die Tubenrohre einer Gruppe aus einer Anzahl von hintereinander transportierten Tubenrohren entnimmt. Auf diese Weise kann die abfördernde Fördereinrichtung einfacher gestaltet werden - bevorzugt umfasst diese äquidistant hintereinander angeordnete und gemeinsam, d.h. nicht in Gruppen unterteilte bzw. in einer Förderrichtung transportierte Aufnahmen, die nach und nach mit Tubenrohren von den Transferelementen gefüllt werden. Wie bereits angedeutet ist es bevorzugt, wenn eine Lückenfüllfunktion von einer solchen abfördernden Fördereinrichtung übernommen wird.

Weiter alternativ ist es denkbar, eine Fördereinrichtung einzusetzen, bei der eine Vielzahl von hintereinander entlang einer, vorzugsweise geschlossen ausgebildeten Führungsbahn (Bewegungsbahn) bewegbare Aufnahmen vorgesehen sind, die nicht gekoppelt, sondern mit individuellen Geschwindigkeiten entlang der Führungsbahn bewegbar sind. Eine derartige abfördernde Fördereinrichtung zeichnet sich dadurch aus, dass auf einfache Weise Tubenrohre von der Transfereinrichtung übernommen und an die nachgeordnete Bearbeitungsstation transportiert werden können, wobei nacheinander Aufnahmen an der Station oder auf dem Weg dorthin so gruppiert werden können (durch entsprechende Ansteuerung der einzelnen Antriebe der Aufnahmen), dass nicht wieder eine serielle Abgabe der Tubenrohre notwendig ist, sondern eine Gruppe von mehreren, auf unterschiedlichen Aufnahmen gehaltenen Tubenrohren zeitgleich an die nachgeordnete Station übergeben werden kann. Die Aufnahmen einer Gruppe haben dabei bevorzugt einen definierten Abstand zueinander, der weiter bevorzugt größer ist als der Abstand von (noch) nicht gruppierten Aufnahmen, d.h. zur Gruppierung wird der Abstand der zunächst vereinzelten Aufnahmen und den darauf befindlichen Tubenrohren verringert. Bevorzugt sind die Aufnahmen dabei mit Haltemitteln zum sicheren und zerstörungs- bzw. beschädigungsfreien Halten der Tubenrohre ausgebildet, um eine Beschädigung der Tubenrohre zu vermeiden und um gleichzeitig einen sicheren Halt der sehr leichten Tubenrohre zu ermöglichen, um ein Wegfliegen sicher zu unterbinden. Besonders geeignet ist hier eine Unterdruckbeaufschlagung. Ein wesentlicher Vorteil einer derartig ausgestalteten Fördereinrichtung sind die vergleichsweise geringen Massen der Transportelemente und ausreichend großen Beschleunigungs- und Bremsstrecken, wodurch ein langsames/sanftes Anfahren und Bremsen ermöglicht wird.

In der vorliegenden Anmeldung ist an unterschiedlichen Stellen von Steuermitteln für die verschiedenen Einrichtungen bzw. Antriebe die Rede. Es kann sich dabei um gemeinsame Steuereinheit handeln, die insbesondere zentral angeordnet ist oder zumindest teilweise um voneinander separate Steuereinheiten, die ggf. miteinander signalleitend verbunden sind oder ihre jeweilige Steueraufgabe bezogen auf eine andere der Steuereinheiten autark ausführen.

Die Erfindung führt auch auf eine Tubenrohrherstellungsvorrichtung mit einem nach dem Konzept der Erfindung ausgebildeten Tubenrohr-Transfersystem, wobei an der nachgeordneten Station eine Dorngruppe vorgesehen ist, zur Aufnahme der von der abfördernden Fördereinrichtung entnommenen Gruppe von Tubenrohren.

Ferner umfasst die Vorrichtung eine Tubenrohrherstellstation, bei der gemäß einer ersten Alternative eine Folie längsrandseitig zu einem endlosen Tubenrohr verschweißt wird, welches daraufhin abgelängt wird, und die so hergestellten Tubenrohre zu der Transfereinrichtung über die anliefernde Fördereinrichtung angeliefert werden. Gemäß einer zweiten Alternative wird die Rohrform an der Tubenrohrherstellstation durch Extrudieren erzeugt, wobei die entstehende endlose Rohrform dann ebenfalls zu den Tubenrohren abgelängt wird.

Ferner betrifft die Erfindung auch ein Verfahren zum Transferieren von Tubenrohren in einem Tubenherstellungsprozess, wobei als wesentliches Merkmal Tubenrohre einzeln zwischen einer anliefernden Fördereinrichtung und einer abfördernden Fördereinrichtung mittels einer Transfereinrichtung entlang eines Teils einer endlosen Bewegungsbahn transportiert werden und zwar in einer gekoppelten Bewegung, d.h. an der Transfereinrichtung vorgesehene Transferelemente bewegen sich alle mit der gleichen Geschwindigkeit, wobei jedoch diese Geschwindigkeit während des Vorgangs variiert wird. Insbesondere in Abhängigkeit der Geschwindigkeit der anliefernden Fördereinrichtung. Erfindungsgemäß ist vorgesehen, dass die Tubenrohre so rotiert werden, dass sich deren Orientierung, d.h. deren Ausrichtung im Raum ändert. Dies steht im Gegensatz zu der Lehre der EP 1 472 062 B1, in welcher beschrieben ist, dass die Orientierung der Tubenrohre bei einer Bewegung mittels eines umlaufenden Rades gleich bleibt, d.h. die Orientierung der Tubenrohre unverändert gehalten bzw. parallel verschoben wird (rein translatorische Bewegung). Wesentlich bei dem erfindungsgemäßen Verfahren ist es, dass trotz einer nicht äquidistanten Beabstandung der Tubenrohre auf der anliefernden Fördereinrichtung eine Übernahme jedes Tubenrohres der jeweiligen Tubenrohrgeschwindigkeit in einem Übernahmebereich zu einem jeweiligen Übernahmezeitpunkt mit einem Transferelement gewährleistet wird. Hierzu wird eine Zeit erfasst, zu welcher das jeweilige Tubenrohr eine bestimmte Position entlang der anliefernden Fördereinrichtung passiert. Unter gleichzeitiger Berücksichtigung einer Geschwindigkeitsinformation zu dem jeweiligen Tubenrohr wird der Übernahmezeitpunkt errechnet und der gemeinsame Antrieb der Transferelemente wird so angesteuert, dass das übernehmende Transferelement sich zum Übernahmezeitpunkt im Übernahmebereich befindet und zudem sich mit der gleichen Geschwindigkeit wie das zu übernehmende Tubenrohr bewegt.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1: eine Seitenansicht einer möglichen Ausführungsform eines nach dem Konzept der Erfindung ausgebildeten Tubenrohr-Transfersystems,
- Fig. 2: eine vergrößerte perspektivische Darstellung einer Transfereinrichtung des Tubenrohr-Transfersystems gemäß Fig. 1,
- Fig. 3: ein Transferelement der Transfereinrichtung gemäß Fig. 2 mit integrierten Rotations- und Abstütz- sowie Haltemitteln,
- Fig. 4: eine vergrößerte Detailansicht einer abfördernden Fördereinrichtung des Tubenrohr-Transfersystems gemäß Fig. 1,
- Fig. 5: eine alternative Realisierungsform einer abliefernden Fördereinrichtung für ein solches Transfersystem,
- Fig. 6:: eine weitere alternative Realisierungsform einer abliefernden Fördereinrichtung für ein solches Transfersystem,
- Fig. 7 und 8:: zwei Diagramme zur prinzipiellen Erläuterung des Ansteuerprinzips der Transferelemente, und
- Fig. 9: ein Tubenrohr-Transfersystem gemäß dem Stand der Technik.

In den Figuren sind gleiche Elemente und Elemente mit der gleichen Funktion mit den gleichen Bezugszeichen gekennzeichnet.

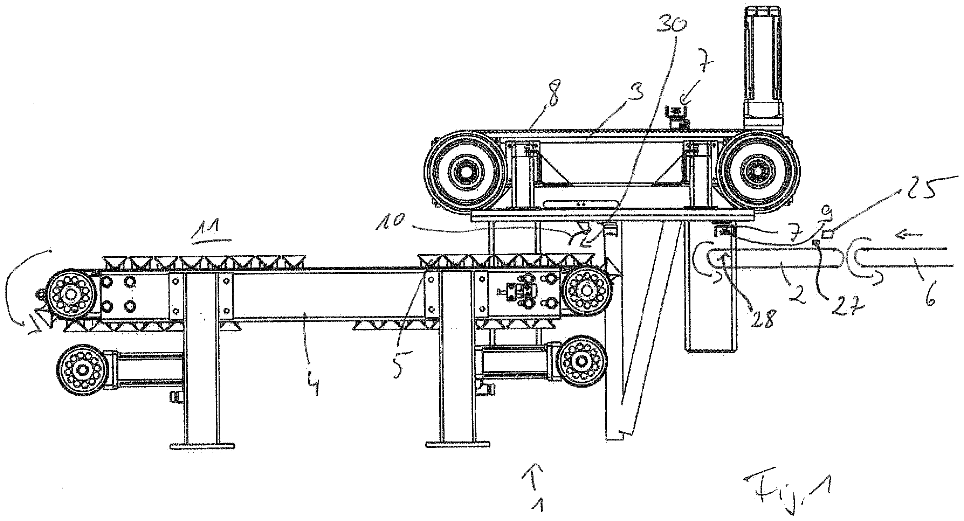

In Fig. 1 ist ein Tubenrohr-Transfersystem 1 gezeigt zum Fördern von Tubenrohren in einem Herstellungsprozess.

Das System umfasst eine anliefernde Fördereinrichtung 2 zum Anliefern von Tubenrohren zu einer bzw. an eine Transfereinrichtung 3 sowie eine abfördernde Fördereinrichtung 4. Mittels der Transfereinrichtung 3 können von der anliefernden Fördereinrichtung 2 angelieferte Tubenrohre übernommen, in dem gezeigten Ausführungsbeispiel abschnittsweise entlang einer endlosen Bewegungsbahn transportiert, dabei um 90° rotiert und dann an Aufnahmen 5 der abfördernden Fördereinrichtung 4 überführt werden.

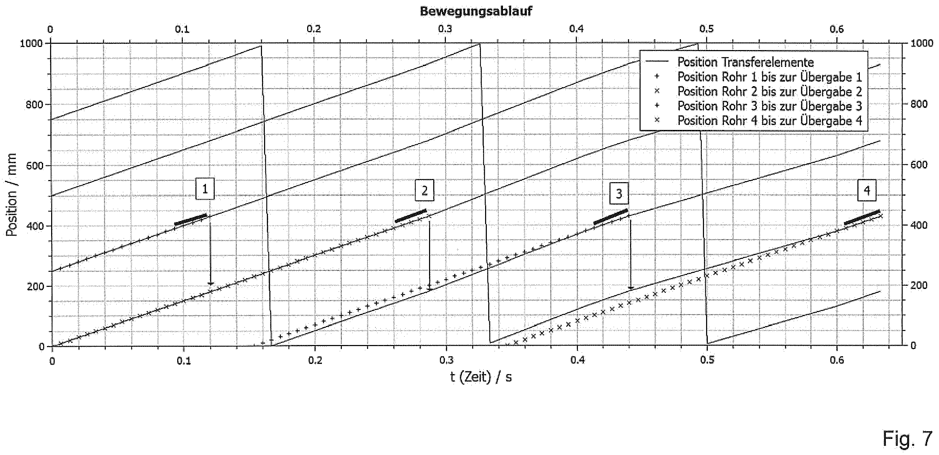

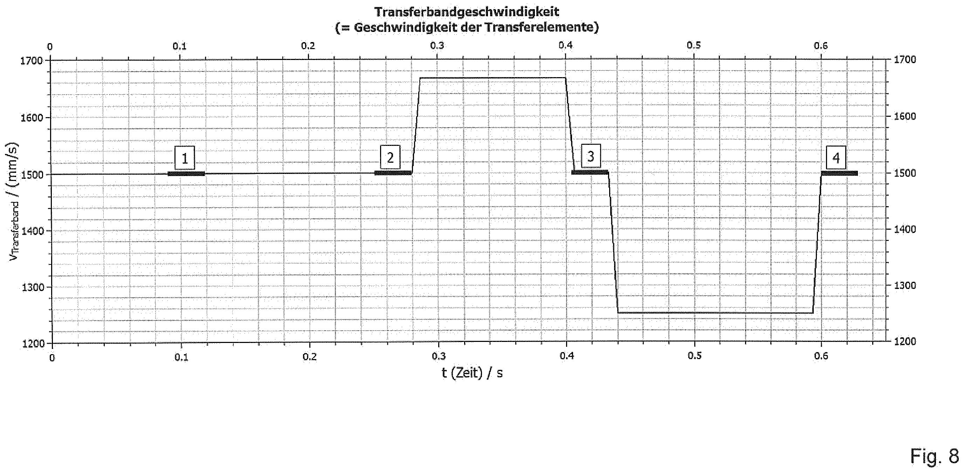

Die anliefernde Fördereinrichtung 2 vereinzelt die sequenziell ankommenden Tubenrohre in einem geringen Maß, indem die beispielsweise als Förderband ausgebildete anliefernde Fördereinrichtungen 2 mit einer geringfügig schnelleren Fördergeschwindigkeit betrieben wird, als die in der Zeichnung rechts daneben angeordnete, in Förderrichtung vorherige Fördereinrichtung 6. Auf eine Vereinzelung vor Erreichen der Transfereinrichtung 3 kann alternativ auch verzichtet werden. Der anliefernden Fördereinrichtung sind fakultative Aussortiermittel 25, insbesondere Ausblasmittel zum Aussondern von als fehlerhaft erkannten Tubenrohren zugeordnet. In Fig. 1 ist die vorherige Fördereinrichtung 6 in der Art eines Förderbandes dargestellt. Alternativ ist es möglich und in der Praxis bevorzugt, dass die Tubenrohre von der Tubenrohrherstellvorrichtung, entsprechend geführt weiter in Richtung anliefernder Fördereinrichtung geschoben werden, derart, dass das jeweils folgende Tubenrohr das vordere Tubenrohr anschiebt, immer bis das jeweils vorderste Tubenrohr auf die anliefernde Fördereinrichtung 2 gelangt, insbesondere ein Stück weit verkippt und dann mit dieser entlang der Längserstreckung der anliefernden Fördereinrichtung 2 transportiert wird. Wesentlich ist, dass in der Praxis eine äquidistante Beabstandung sämtlicher Tubenrohre auf der anliefernden Fördereinrichtung 2 nicht realisierbar ist und daher die Transferelemente, wie später noch anhand der Fig. 7 und 8 an einem Beispiel erläutert werden wird angesteuert werden um diesen variierenden Abstand auszugleichen.

Die Transfereinrichtung 3 umfasst eine Vielzahl von Transferelementen 7, von denen aus Übersichtlichkeitsgründen nur drei dargestellt sind. Die mehreren Transferelemente 7 sind voneinander beabstandet an einem umlaufenden Band 8 angeordnet und werden mit der gleichen Geschwindigkeit auf einer endlosen Bewegungsbahn bewegt, wobei einem Antrieb des Bandes 8 und damit der Transferelemente 7 nicht gezeigte Steuermittel zugeordnet sind, die den Antrieb so ansteuern, dass die Geschwindigkeit der Transferelemente 7 auf die Geschwindigkeit der anliegenden Fördereinrichtung 2 abgestimmt bzw. mit dieser wie anhand der Fig. 7 und 8 erläutert werden wird synchronisiert wird.

Die Transferelemente 7 transportieren die Tubenrohre entlang der Bewegungsbahn und halten die Tubenrohre über Saugmittel 9. Wie später noch erläutert werden wird, umfassen die Transferelemente 7 Rotationsmittel zum Rotieren der Tubenrohre während des Transports. Mit Hilfe von diesen werden die Tubenrohre so verdreht, dass sich deren Längsorientierung im Raum ändert, hier konkret um 90°. Die Rotationsebene, senkrecht zur der die Rotationsachse orientiert ist, ist in dem gezeigten Ausführungsbeispiel eine Horizontalebene, die sich senkrecht erstreckt zu einer von der Bewegungsbahn der Transportelemente definierten Ebene, hier eine Vertikalebene. Die Tubenrohre werden dann gegen, hier in der Bewegungsrichtung der Transferelemente 7 gekrümmte Abstreifermittel 10 gefördert, gleichzeitig wird die Unterdruckversorgung der Saugmittel 9 unterbrochen und die Tubenrohre gelangen an einer Übergabeposition 30 in die Aufnahmen 5 der abfördernden Fördereinrichtung 4.

Bevorzugt wird diese Übergabe durch Saugen in Richtung der abfördernden Fördereinrichtung und/oder durch Drücken (Blasen) mittels Druckluft in Richtung der abfördernden Fördereinrichtung unterstützt.

Die Tubenrohre gelangen dann mittels der abfördernden Fördereinrichtung zu einer nachgeordneten (Bearbeitungs-)Station 11, an welcher sie über geeignete Greifermittel, insbesondere Vakuumgreifermittel in Gruppen entnommen werden. Aufgrund der Rotation der Tubenrohre ist die Orientierung der Tubenrohre an der Station 11 senkrecht zur Förderrichtung der abfördernden Fördereinrichtung 4.

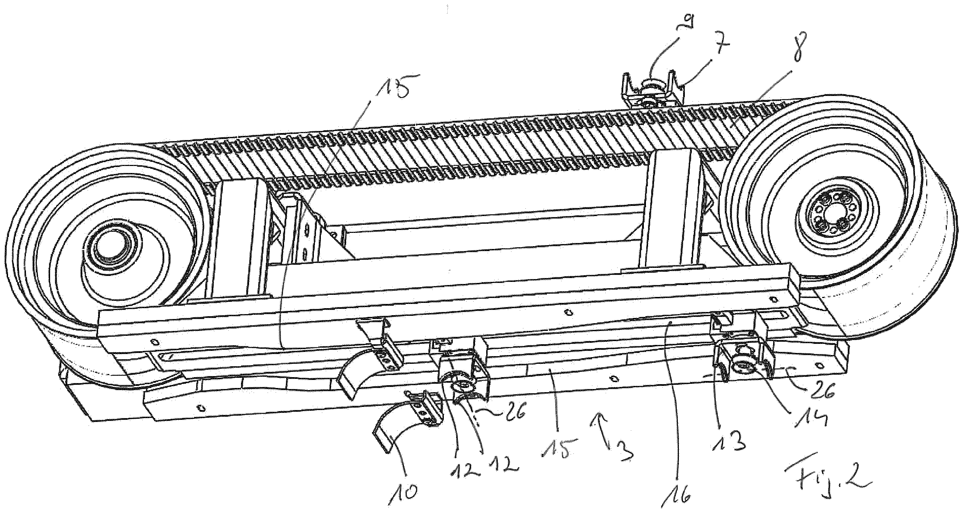

In Fig. 2 ist eine vergrößerte Darstellung der Transfereinrichtung 3 gezeigt. Zu erkennen ist das umlaufende Band 8 mit seinen Transferelementen 7.

Diese umfassen schalenförmige Abstützmittel 12 für die Tubenrohre, wobei die Abstützmittel 12 Teil von Rotationsmitteln 13 sind. Die Rotationsmittel 13 umfassen eine um ein Drehlager rotierbare, mit der Rotationsachse zusammenfallende Drehachse, um die die Abstützmittel 12 rotierbar sind. Zu erkennen sind die als Sauggreifer ausgebildeten Haltemittel 14 für die Tubenrohre, die die Tubenrohre gegen die Abstützmittel 12 saugen.

In Fig. 2 ist zu erkennen, dass die Transferelemente von einer in der Zeichnungsebene rechts gezeigten (unteren) Übernahmeposition in der Förderrichtung in der Zeichnungsebene nach links rotiert werden, und zwar um 90°, so dass sich aus die Ausrichtung der Tubenrohre von einer längsgerichteten Ausrichtung in Förderrichtung in eine quergerichtete Ausrichtung verändert, um dann gegen Abstreifermittel 10 gefördert und auf die abfördernde Fördereinrichtung übergeben zu werden. In dem gezeigten Ausführungsbeispiel rotieren die Haltemittel 14 bei der Rotationsbewegung nicht mit, wobei dies alternativ selbstverständlich auch realisierbar ist.

Während der Rotation ändert sich die Orientierung von den Transferelementen, genauer der von deren Abstützmitteln 12 definierte Aufnahmeachse 26 für die Tubenrohre, die im mit einem Tubenrohr beladenen Zustand mit der Tubenrohrlängsachse zusammenfällt. Besonders deutlich wird dies bei einer Betrachtung der Fig. 2. Zu erkennen ist, dass die Aufnahmeachse zum Übernahmezeitpunkt von der anliefernden Fördereinrichtung mit der Orientierung der Tubenrohre auf der anliefernden Fördereinrichtung übereinstimmt und gegen Ende des zurückzulegenden Bewegungsbahnabschnittes (insbesondere an der Übergabeposition zur Übergabe an die abfördernde Fördereinrichtung) um 90° gedreht ist, dass also die Aufnahmeachse (Orientierung der Längserstreckungsrichtung des transportierten Tubenrohres) im Raum gedreht wird, und zwar um in diesem Ausführungsbeispiel 90°. Die die Aufnahmeachse 26 aufnehmende Ebene ist in dem gezeigten Ausführungsbeispiel eine Horizontalebene, die senkrecht steht zu der von der Bewegungsbahn der Transferelemente definierten Ebene, hier einer Vertikalebene. Die Rotationsachse erstreckt sich senkrecht zur Aufnahmeachse 26 und liegt in der Bewegungsbahnebene.

Die Rotationsbewegung wird in dem gezeigten Ausführungsbeispiel dadurch aktuiert, dass sich entlang der Bewegungsbahn eine Kurve 15 erstreckt, mit der die Rotationsmittel zusammenwirken und damit die Abstützmittel 12 rotieren. In dem gezeigten Ausführungsbeispiel sind zwei parallele Kurven 15 vorgesehen, wobei alternativ auch nur eine Kurve vorgesehen sein kann und die Rückstellung über eine Federkraftbeaufschlagung realisiert ist. Zur Unterdruckbeaufschlagung der Haltemittel 14 werden diese innerhalb einer mit Unterdruck beaufschlagten Nut 16 bewegt.

Hierdurch wird bewirkt, dass der Unterdruck nicht während der ganzen Bewegung entlang der Bewegungsbahn anliegt, sondern im Wesentlichen lediglich von einem Übernahmebereich in dem die Tubenrohre von der anliefernden Fördereinrichtung übernommen werden bis zu einem Übergabebereich, in den die Tubenrohre an die abfördernde Fördereinrichtung übergeben werden. Im Bereich der Abstreifermittel 10 wird die Unterdruckversorgung unterbrochen.

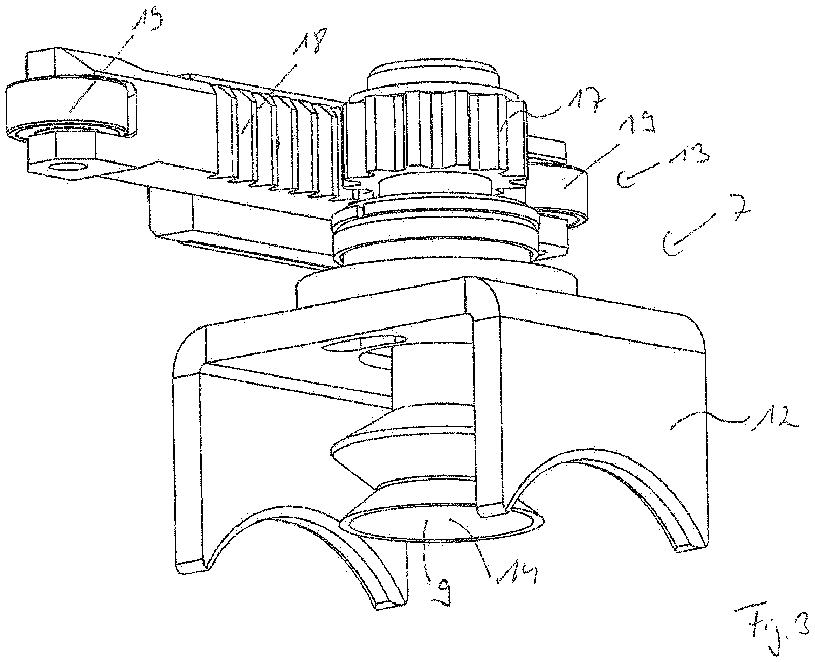

Fig. 3 zeigt eine mögliche Ausgestaltung der Transferelemente 7. Diese umfassen die schalenartigen Abstützmittel 12, hier beispielhaft 2 über die Haltemittel 14 beabstandete Schalen.

Zu erkennen sind auch die Rotationsmittel 13, die eine Rotationsachse definieren und über die die Abstützmittel 12 um diese Rotationsachse rotierbar sind.

Zum Rotieren der Rotationsmittel ist ein Zahnrad 17 vorgesehen, durch das zentrisch die gedachte Rotationsachse verläuft. Das Zahnrad 17 wirkt mit einer Zahnstange 18 zusammen, die hier beispielhaft über Rollen 19 entlang der Kurven 15 transportiert wird, wodurch die Zahnstange 18 relativ zu dem Zahnrad 17 verschoben wird und dieses so, in dem gezeigten Ausführungsbeispiel auf dem Weg zur Übergabeposition um 90° verdreht.

Alternativ gestaltete Transferelemente sind denkbar insbesondere im Hinblick auf die Ausgestaltung der Haltemittel. So ist es denkbar, zusätzlich oder alternativ zu den Saugmitteln 9, mechanisch wirkende Haltemittel vorzusehen.

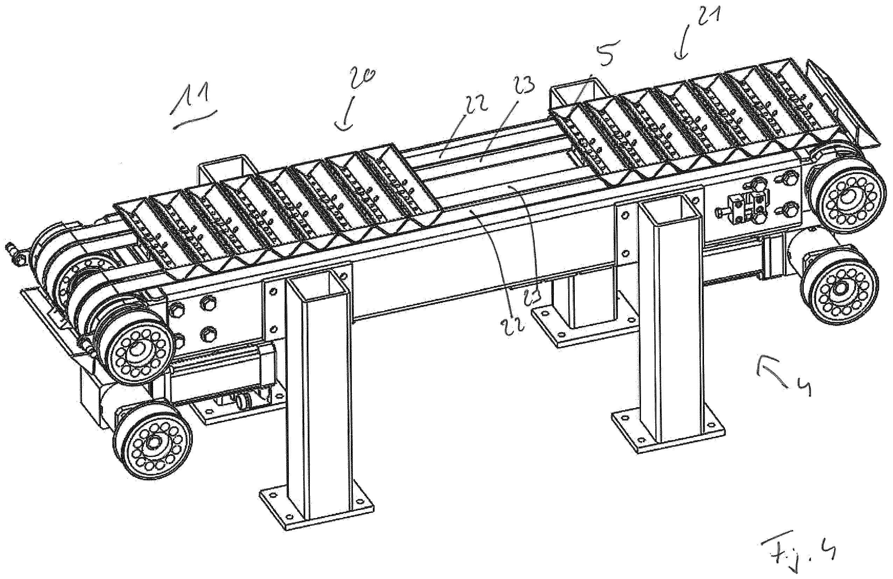

Fig. 4 zeigt eine mögliche Ausgestaltung der abfördernden Fördereinrichtung 4. Zu erkennen sind eine Vielzahl von Aufnahmen, wobei die Aufnahmen 5 in dem gezeigten Ausführungsbeispiel auf zwei Gruppen 20, 21 von Aufnahmen verteilt sind.

Jede Gruppe 20, 21 ist an einem Paar von Bändern 22, 23 festgelegt, so dass die Aufnahmen einer Gruppe gemeinsam in eine Bewegungsrichtung, hier in der Zeichnungsebene nach links transportierbar/förderbar sind, wobei die Gruppen 20, 21 individuell förderbar sind.

Die Aufnahmen 5 werden unterhalb der Transfereinrichtung, in dem gezeigten Ausführungsbeispiel unterhalb der Abstreifermittel 10 weiterbewegt und nacheinander mit jeweils einem Tubenrohr gefüllt, wobei das Tubenrohr aufgrund der vorherigen Drehung eine Orientierung senkrecht zur Förderrichtung der abfördernden Fördereinrichtung 4 aufweist. Die Aufnahmen 5 werden dabei durch eine geeignete Steuerung des entsprechenden Antriebs über Steuermittel vor der Übergabe in Bewegung gesetzt bzw. so gefördert, dass sich die Aufnahmen während des Kontaktzeitpunkts in der Förderrichtung bewegen. Die Förderrichtung der abfördernden Fördereinrichtung entspricht in dem gezeigten Ausführungsbeispiel der Förderrichtung der Transferelemente 7 der Transfereinrichtung während der Übergabe.

An der nachgeordneten Station 11 angekommen, wird eine gesamte Gruppe von Tubenrohren der Gruppe von Aufnahmen 20 gleichzeitig entnommen und auf entsprechende Dorne aufgesetzt.

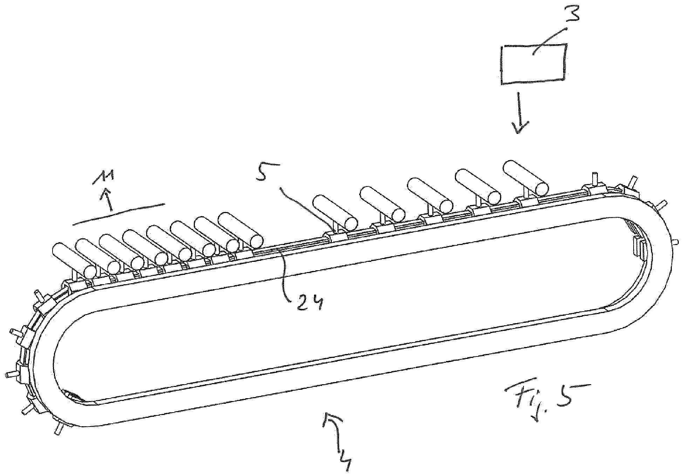

Fig. 5 zeigt eine alternative Ausgestaltung einer abfördernden Fördereinrichtung. Im Gegensatz zu der abfördernden Fördereinrichtung gemäß Fig. 4 sind sämtliche Aufnahmen 5 der abfördernden Fördereinrichtung gemäß Fig. 5 individuell ansteuerbar bzw. mit einer individuellen Geschwindigkeit entlang einer umlaufenden Führungsbahn 24 (Bewegungsbahn) verstellbar.

Zu erkennen ist, dass die Aufnahmen rotationsmittelfrei sind. Die Orientierung der Längsachsen der Aufnahmen ist senkrecht zur Orientierung der Tubenrohrlängserstreckung auf der anliefernden Fördereinrichtung. Durch Rotation der Aufnahmeachsen im Raum mit Hilfe der Transfereinrichtung werden die Tubenrohre zur Aufnahme in den Aufnahmen der abfördernden Fördereinrichtung vorbereitet.

Je nach Ausbildung und Anordnung der Aufnahmen 5 setzt die Bewegung der Aufnahmen gedanklich die Vorwärtsbewegung der Transportelemente fort oder ist um 90° winklig hierzu angeordnet.

In dem gezeigten Ausführungsbeispiel werden die Aufnahmen 5 elektromagnetisch in der Art eine Linearmotors entlang der Führungsbahn 24 bewegt, wobei es hierzu vorteilhaft ist, wenn im Bereich der Führungsbahn eine Vielzahl von mittels der Steuermittel individuell bestrombare Induktionsspuren angeordnet sind, die mit wenigstens einem an der jeweiligen Aufnahme angeordneten Magneten, insbesondere einem Permanentmagneten zusammenwirken, wobei die Bewegung der Aufnahmen entlang der Führungsbahn durch Bestromen der einzelnen Induktionsspulen entlang der Führungsbahn erfolgt, derart, dass die jeweilige Induktionsspule eine Antriebskraft auf die jeweilige Aufnahme, genauer das an diesen angeordnete Permanentmagnetelement ausübt und dadurch die Aufnahme in gewünschter Weise mittels beliebiger Geschwindigkeitsprofile vorwärts bewegt. Alternativ ist auch eine Ausführungsform denkbar, bei der die Aufnahme mit antreibbaren Rädern ausgestattet ist.

Besonders bevorzugt sind die Steuermittel zusätzlich mit Positionserkennungsmitteln verbunden, so dass zu jeder Zeit eine Positionsinformation über die einzelnen Aufnahmen auf der Führungsbahn 24 zur Verfügung steht.

Denkbar ist eine magnetische Codierung, oder der Einsatz von Lichtschranken oder sonstigen Sensoren. Ebenso ist es denkbar, die Phasenverschiebung der Ströme zum Bestromen der einzelnen Elektromagnete entlang der Strecke auszuwerten und hieraus eine Positionsinformation abzuleiten.

Zu erkennen ist, dass die Tubenrohre auf den Weg zur nachgeordneten Station 11 gruppiert werden. An der Station 11 werden die gruppierten Tubenrohre gemeinsam entnommen. Die Orientierung der Tubenrohre ist dabei im Raum um 90° gedreht verglichen mit der Orientierung auf der nicht gezeigten anliefernden Fördereinrichtung.

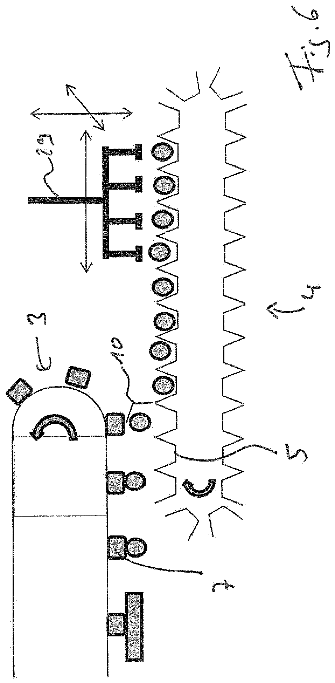

In Fig. 6 ist eine weitere alternative Ausführungsform einer abfördernden Fördereinrichtung 4 gezeigt. Zu erkennen ist, dass die Tubenrohre nacheinander von Transferelementen 7 der zuvor bereits im Detail beschriebenen Transfereinrichtung 3 übergeben werden, und zwar mit Unterstützung von bereits erläuterten Abstreifermitteln 10.

Die abfördernde Fördereinrichtung 4 umfasst eine Vielzahl von hintereinander angeordneten Aufnahmen 5 für die Tubenrohre, wobei die Aufnahmen 5 nicht zu Gruppen gruppiert sind, sondern gleich beabstandet hintereinander angeordnet sind und sämtliche Aufnahmen 5 der abfördernden Fördereinrichtung 4 mit der gleichen, an die Geschwindigkeit der Transferelemente 7 angepassten Geschwindigkeit hin zu einem Entnahmegreifer 29 transportiert werden. Mit Letzterem erfolgt dann die eigentliche Gruppierung bzw. die Übergabe einer aus hier beispielhaft vier Tubenrohren bestehenden Gruppe. Die Tubenrohre einer Tubengruppe werden gleichzeitig entnommen und auf nicht gezeigte Dorne einer nachgeordneten Bearbeitungsstation aufgesetzt.

Anhand der Fig. 7 und 8 wird die erfindungsgemäße Ansteuerung des gemeinsamen Antriebs der Transferelemente eines nach dem Konzept der Erfindung ausgebildeten Tubenrohr-Transfersystems erläutert, wobei der grundsätzliche Aufbau des Systems in den vorstehend erläuterten Figuren mit zugehöriger Figurenbeschreibung erklärt ist. Bei der beispielhaften Darstellung gemäß den Fig. 7 und 8 wird von einem Tubenrohr-Transfersystem ausgegangen, bei dem insgesamt vier Transferelemente entlang von endlosen Kopplungsmitteln, beispielsweise einem Transferband angeordnet sind. Konkret befinden sich die vier Transferelemente von einem jeweiligen äquidistanten Abstand von 250mm hintereinander entlang der Kopplungsmittel. Diese haben somit eine (endlose) Gesamtlänge von 1 m. Im Diagramm gemäß Fig. 4 wird dabei bei Erreichen eines jeweiligen Transferelementes der Position 1000mm dessen Position auf null gesetzt.

Weiter sind in dem Ausführungsbeispiel die zu transferierenden Tubenrohre 150mm lang. Die gewünschte Soll-Lücke (Soll-Abstand) zwischen jeweils zwei hintereinander angeordneten Tubenrohren auf der anliefernden Fördereinrichtung beträgt beispielhaft 100mm, so dass für den in der Praxis nicht vorkommenden Idealfall der gemeinsame Antrieb der Transferelemente diese konstant mit derselben Geschwindigkeit antreiben könnte, wie die anliefernde Fördereinrichtung von ihrem Antrieb angetrieben wird.

Für das Beispiel wird davon ausgegangen, dass, wie dies für die Praxis realistisch ist, die Lücke, d.h. der Abstand zwischen zwei hintereinander angeordneten Tubenrohren auf der anliefernden Fördereinrichtung um (bis zu) etwa 2cm schwankt, d.h. im vorliegenden Beispiel teilweise 80mm und 120mm beträgt.

Mit in Fig. 1 angedeuteten, und mit dem Bezugszeichen 27 gekennzeichneten Positionssensormitteln werden fortlaufend Zeitpunkte erfasst, zu denen die Tubenrohre auf der anliefernden Fördereinrichtung die Positionssensormittel passieren.

Für das vorliegende Beispiel wird unterstellt, dass die Geschwindigkeit der anliefernden Fördereinrichtung zu jedem Zeitpunkt hinreichend genau bekannt - und für das Beispiel vereinfacht konstant ist. In der Praxis kann es jedoch zu Variationen dieser Geschwindigkeit kommen, die bevorzugt berücksichtigt werden, wobei die Geschwindigkeitsinformation über ein Positionssignal eines Drehgebermotors oder andere geeignete Geschwindigkeitssensormittel erhalten werden kann.

Im vorliegenden Beispiel wird davon ausgegangen, dass der Abstand zwischen den Positionssensormitteln 27 (vgl. Fig. 1) und einem Übernahmebereich 28 (vgl. wiederum Fig. 1) beispielhaft 380mm beträgt. Der Übernahmebereich erstreckt sich beispielhaft über 50mm.

Eine dem Tubenrohr-Transfersystem vorgeordnete Tubenherstellstation produziert beispielsweise 360 Tubenrohre pro Minute, was einer Produktionsfrequenz von sechs Tubenrohen pro Sekunde entspricht. Eine Geschwindigkeit V_{A} der anliefernden Fördereinrichtung wird so eingestellt, dass der Soll-Abstand bzw. ein mittlerer Abstand zwischen jeweils hintereinander angeordneten Tubenrohren 100mm beträgt bzw. dass alle 250mm ein Tubenrohr zum Liegen kommt. Somit ist die Geschwindigkeit V_{A} gleich der vorgenannten Frequenz multipliziert mit 250mm, was im Ergebnis 1,5m/s ergibt.

Soll-) Abstand zum vorderen Ende des ersten Tubenrohres von 250mm (d.h. die Lücke bzw. der Abstand zwischen dem ersten und dem zweiten Tubenrohr beträgt 100mm) und passiert somit soeben die Positionssensormittel. Das nächste bzw. übernehmende Transferelement befindet sich ebenfalls (bezogen auf die gemeinsame Bewegungsrichtung) 130mm vor dem Übernahmebereich.

Sämtliche Transferelemente und die anliefernde Fördereinrichtung (und somit auch die darauf befindlichen Tubenrohre) bewegen sich mit derselben Geschwindigkeit. Daran ändert sich auch nach der Übernahme des ersten Tubenrohres nichts, da, wie erläutert, auch das zweite Tubenrohr im richtigen bzw. Soll-Abstand folgt. Das dritte Tubenrohr hingegen folgt mit einem geringeren Abstand (Lücke) von hier beispielhaft 80mm und wird daher (bei unterstellter gleichbleibender Geschwindigkeit der anliefernden Fördereinrichtung) frührer den Übernahmebereich erreichen. Sobald die Übernahme des ersten Tubenrohres auf das übernehmende Transferelement vollendet wird, wenn also das Transferelement um 50mm weiter entlang seiner Bewegungsbahn verfahren wurde, muss der gemeinsame Antrieb der Transferelemente in der Zeit um 200mm (250mm-50mm) weiterbewegt werden, in welcher das nächste (dritte) Tubenrohr um 180mm auf der anliefernden Fördereinrichtung weiterbewegt wurde.

Dies kann beispielsweise dadurch erreicht werden, dass sämtliche Transferelemente durch entsprechende Ansteuerung des gemeinsamen Antriebs (hier für das Beispiel vereinfacht ruckartig) auf 1,6667m/s beschleunigt werden und beim dadurch bewirkten, simultanen Erreichen des Übernahmebereichs des dritten Tubenrohrs und des zugehörigen Transferelementes ruckartig wieder auf 1,5m/s abgebremst wird. Die Wahl vorstehender Werte wurde lediglich aufgrund der vereinfachten Darstellbarkeit gewählt - in der Praxis folgen Beschleunigung und Bremsung bevorzugt einem geschwungenen Verlauf, beispielsweise einer aus Polynomen zusammengesetzten Kurve, um "harte Schläge" zu vermeiden.

Analog muss zum Übernehmen des vierten Tubenrohres das dann übernehmende Transferelement und somit alle Transferelemente durch entsprechende Ansteuerung des gemeinsamen Antriebs gebremst werden, im Beispiel auf 1,25m/s, wenn der Abstand zwischen dem dritten und dem vierten Tubenrohr hier größer ist als der ideale Abstand bzw. Soll-Abstand.

### Bezugszeichenliste

- 1: Tubenrohr-Transfersystem
- 2: anliefernde Fördereinrichtung
- 3: Transfereinrichtung
- 4: abfördernde Fördereinrichtung
- 5: Aufnahmen
- 6: Fördereinrichtung
- 7: Transferelemente
- 8: Band
- 9: Saugmittel
- 10: Abstreifermittel
- 11: nachgeordnete Station
- 12: Abstützmittel
- 13: Rotationsmittel
- 14: Haltemittel
- 15: Kurve
- 16: Nut
- 17: Zahnrad
- 18: Zahnstange
- 19: Rollen
- 20: Gruppe
- 21: Gruppe
- 22: Bandpaar
- 23: Bandpaar
- 24: Führungsbahn
- 25: Aussortiermittel
- 26: Aufnahmeachse
- 27: Positionssensormittel
- 28: Übernahmebereich
- 29: Entnahmegreifer
- 30: Übergabeposition

## Patentansprüche

1. Tubenrohr-Transfersystem zum Fördern von Tubenrohren in einem Tubenherstellungsprozess von einer Tubenrohrherstellstation zu einer dieser nachgeordneten Station, umfassend eine anliefernde Fördereinrichtung (2), die ausgebildet ist zum Transportieren beabstandeter Tubenrohre in Richtung ihrer Längserstreckung und eine abfördernde Fördereinrichtung (4), die so ausgebildet ist, dass von dieser im Bereich der nachgeordneten Station (11) zu einer Gruppe (20, 21) gruppierte Tubenrohe gemeinsam entnehmbar sind, wobei zwischen der anliefernden Fördereinrichtung (2) und der abfördernden Fördereinrichtung (4) eine Transfereinrichtung (3, 7) mit einer Mehrzahl von gekoppelt entlang einer endlosen Bewegungsbahn mittels eines gemeinsamen Antriebs antreibbaren, jeweils eine in einem mit einem Tubenrohr beladenen Zustand mit einer Tubenrohrlängsachse zusammenfallende Aufnahmeachse (26) definierenden und bevorzugt entlang der Bewegungsbahn äquidistant angeordneten, Transferelementen (7) vorgesehen ist, wobei dem gemeinsamen Antrieb der Transferelemente (7) Steuermittel zur Variation der Geschwindigkeit der Transferelemente (7) entlang der Bewegungsbahn zugeordnet sind, und wobei von der anliefernden Fördereinrichtung (2) angelieferte Tubenrohre einzeln mittels jeweils eines Transferelementes (7) der Transfereinrichtung (3) zu einem jeweiligen Übernahmezeitpunkt in einem Übernahmebereich (28) übernehmbar, entlang der Bewegungsbahn förderbar und auf die abfördernde Fördereinrichtung (4) transferierbar sind, wobei den Transferelementen (7) Rotationsmittel (13) zum Rotieren der Tubenrohre während des Verstellens entlang der endlosen Bewegungsbahn um eine jeweilige Rotationsachse zugeordnet sind, wobei die Rotationsmittel bei einer Rotation der Tubenrohre um die jeweilige Rotationsachse die Orientierung der jeweiligen Aufnahmeachse (26) im Raum verändernd ausgebildet sind, insbesondere derart, dass die von der anliefernden Fördereinrichtung (2) parallel zur Förderrichtung orientiert angelieferten Tubenrohre winklig, bevorzugt senkrecht, zu der Förderrichtung der anliefernden Fördereinrichtung und/oder der Transferelemente (7) entlang der Bewegungsbahn der Transfereinrichtung orientiert auf die abfördernde Fördereinrichtung (4) überführbar sind und wobei die Steuermittel den gemeinsamen Antrieb der Transferelemente (7) zum Ausgleich einer nicht äquidistanten Beabstandung der Tubenrohre auf der anliefernden Fördereinrichtung (2) derart ansteuernd, insbesondere den Antrieb beschleunigend und/oder verlangsamend, ausgebildet sind, dass sich ein Übernehmendes der Transferelemente (7) trotz der nicht äquidistanten Beabstandung der Tubenrohre auf der anliefernden Fördereinrichtung (2) zum Übernahmezeitpunkt im Übernahmebereich (28) befindet und sich zudem sämtliche gekoppelt entlang der Bewegungsbahn bewegbaren Transferelemente (7) zum Übernahmezeitpunkt mit der Geschwindigkeit des zu Übernehmenden der Tubenrohre entlang der Längserstreckung der anliefernden Fördereinrichtung (2) entlang der Bewegungsbahn bewegen,
**dadurch gekennzeichnet, dass** die abfördernde Fördereinrichtung (4) mehrere Aufnahmen (5) für die Tubenrohre aufweist und dass Abstreifermittel (10) vorgesehen sind, die so angeordnet und ausgebildet sind, dass von den Transferelementen (7) entlang der endlosen Bewegungsbahn transportierte Tubenrohre gegen die Abstreifermittel (10) zur Übergabe auf die Aufnahmen (5) der abfördernden Fördereinrichtung (4) förderbar sind.

2. Tubenrohr-Transfersystem nach Anspruch 1,
**dadurch gekennzeichnet,**
**dass** die Steuermittel signalleitend mit Positionssensormitteln verbunden sind, mit dem detektierbar ist, zu welchem Zeitpunk die Tubenrohre eine vorgegebene Position entlang der anliefernden Förderrichtung (2) passieren und dass die Steuermittel den gemeinsamen Antrieb in Abhängigkeit dieser Zeitinformation und einer Geschwindigkeitsinformation zu dem jeweiligen Tubenrohr ansteuernd ausgebildet sind.

3. Tubenrohr-Transfersystem nach Anspruch 2,
**dadurch gekennzeichnet,**
**dass** Steuermittel die Geschwindigkeitsinformation auf Basis eines Drehgebersignals eines Antriebs der anliefernden Fördereinrichtung (2) und/oder der anliefernden Fördereinrichtung oder den darauf transportierbaren Tubenrohres zugeordneten Geschwindigkeitssensors erhaltend oder ermittelnd ausgebildet sind.

4. Tubenrohr-Transfersystem nach einem der Ansprüche 2 oder 3,
**dadurch gekennzeichnet,**
**dass** Steuermittel zur Berechung des Übernahmezeitpunktes mehrfach, insbesondere sich ändernde, Geschwindigkeitsinformationen berücksichtigend ausgebildet sind.

5. Tubenrohr-Transfersystem nach einem der vorhergehenden Ansprüche,
**dadurch gekennzeichnet,**
**dass** die Transferelemente (7) mittels der Rotationsmittel (13) unabhängig voneinander um die jeweilige Rotationsachse rotierbar sind.

6. Tubenrohr-Transfersystem nach einem der vorhergehenden Ansprüche,
**dadurch gekennzeichnet,**
**dass** die Rotationsmittel (13) über Steuermittel ansteuerbare, insbesondere elektromotorische, Rotationsantriebe zum Rotieren der Tubenrohre um die jeweilige Rotationsachse aufweisen, oder dass die Rotationsmittel (13) die jeweilige Rotationsachse definierende, an den Transferelementen vorgesehene Drehgelenke zum Rotieren der Tubenrohre umfassen, und dass die Drehgelenke beim Transport der Tubenrohre entlang einer Kurvenbahn verstellbar sind, die zum mechanischen Zusammenwirken mit den Drehgelenken zum Rotieren der Drehgelenke mit den Tubenrohren ausgebildet und angeordnet ist.

7. Tubenrohr-Transfersystem nach einem der vorhergehenden Ansprüche,
**dadurch gekennzeichnet,**
**dass** eine die Aufnahmeachse aufnehmende und senkrecht zur Rotationsachse ausgerichtete, vorzugsweise horizontale, Rotationsebene senkrecht zu einer die Bewegungsbahnen aufnehmenden, vorzugsweise vertikalen, Ebene angeordnet ist.

8. Tubenrohr-Transfersystem nach einem der vorhergehenden Ansprüche,
**dadurch gekennzeichnet,**
**dass** die Transferelemente (7) zwischen einer Übernahmeposition (28) zur Übernahme der Tubenrohre von der anliefernden Fördereinrichtung (2) und einer Übergabeposition (30) zur Übergabe der Tubenrohre an die abfördernde Fördereinrichtung (4) ausschließlich entlang eines geradlinigen Bewegungsbahnabschnittes bewegbar sind und/oder dass die Rotationsmittel die Tubenrohre ausschließlich während eines Transportes der Tubenrohre entlang eines geradlinigen Bewegungsbahnabschnittes rotierend ausgebildet sind.

9. Tubenrohr-Transfersystem nach einem der vorhergehenden Ansprüche,
**dadurch gekennzeichnet,**
**dass** die Steuermittel die abfördernde Fördereinrichtung (4) so ansteuernd ausgebildet sind, dass mindestens eine leere Aufnahme zur Übernahme eines Tubenrohres von einem der Transferelemente (7) der Transfereinrichtung (3) während der Übergabe bewegt wird, bevorzugt parallel zur Bewegungsrichtung des Übergebenden der Transferelemente (7), insbesondere mit einer Geschwindigkeit, die in einem festen Verhältnis zur Geschwindigkeit der Transferelemente (7) steht.

10. Tubenrohr-Transfersystem nach Anspruch 9,
**dadurch gekennzeichnet,**
**dass** die Steuermittel die abfördernde Fördereinrichtung (4) so ansteuernd ausgebildet sind, dass die leere Aufnahme zur Übernahme eines Tubenrohres aus dem Stillstand beschleunigt wird, oder so, dass die leere Aufnahme zur Übergabe eines Tubenrohres aus einer laufenden Bewegung beschleunigt oder verzögert wird.

11. Tubenrohr-Transfersystem nach einem der vorhergehenden Ansprüche,
**dadurch gekennzeichnet,**
**dass** die Transferelemente (7) Haltemittel (14) zum Halten der Tubenrohre während des Transportes entlang der Bewegungsbahn, bevorzugt durch Unterdruckbeaufschlagung aufweisen, wobei bevorzugt Mittel zur Unterbrechung oder Reduzierung der Unterdruckbeaufschlagung bei der Übergabe der Tubenrohre auf die abfördernde Fördereinrichtung (4) vorgesehen sind.

12. Tubenrohr-Transfersystem nach einem der vorhergehenden Ansprüche,
**dadurch gekennzeichnet,**
**dass** die Abstreifermittel (10) ortsfest angeordnet sind.

13. Tubenrohr-Transfersystem nach einem der vorhergehenden Ansprüche,
**dadurch gekennzeichnet,**
**dass** die, vorzugsweise eine gekrümmte Form aufweisenden, Abstreifermittel (10) so ausgebildet sind, dass diese die Tubenrohre bei einer Bewegung der Tubenrohre entlang der Abstreifermittel (10) auf eine Geschwindigkeitskomponente der Tubenrohre parallel zur Bewegungsrichtung einer leeren Aufnahme (5) der abfördernden Fördereinrichtung (4) abbremsen, bevorzugt derart, dass die Tubenrohre beim Verlassen der Abstreifermittel (10) mit einer der Geschwindigkeit der zugehörigen leeren Aufnahme (5) entsprechenden Geschwindigkeit parallel zur leeren Aufnahme (5) bewegt werden.

14. Tubenrohr-Transfersystem nach einem der vorhergehenden Ansprüche,
**dadurch gekennzeichnet,**
**dass** Mittel zum Ansaugen und/oder Druckluftbeaufschlagen von auf die abfördernde Fördereinrichtung (4) zu übergebenden Tubenrohren in Richtung der abfördernden Fördereinrichtung (4) vorgesehen sind.

15. Tubenrohrherstellungsvorrichtung mit einem Tubenrohr-Transfersystem (1) mit einer an der nachgeordneten Station (11) vorgesehenen Dorngruppe zur Aufnahme der von der abfördernden Fördereinrichtung (4) mit Hilfe von Entnahmemitteln entnommenen Gruppe (20, 21) von Tubenrohren und mit der Tubenrohrherstellstation zugeordneten Schweißmittel zum Verschweißen eines Substrates zu einer Rohrform oder mit der Tubenrohrherstellstation zugeordneten Extrudiermitteln zum Extrudieren einer Rohform, **dadurch gekennzeichnet dass** das Tubenrohr-Transfersystem (1) einem Tubenrohr-Transfersystem nach einem der vorhergehenden Ansprüche entspricht.

16. Verfahren zum Transferieren von Tubenrohren in einem Tubenherstellungsprozess von einer Tubenrohrherstellstation zu einer dieser nachgeordneten Station (11), insbesondere mit einem Tubenrohr-Transfersystem (1) nach einem der Ansprüche 1 bis 14, wobei mit einer anliefernden Fördereinrichtung (2), insbesondere aus einem Kunststoffsubstrat ausgebildete, bevorzugt geschweißte oder extrudierte, Tubenrohre beabstandet in Richtung ihrer Längserstreckung angeliefert werden und wobei die jeweils eine in Richtung ihrer Längserstreckung orientierte Tubenlängsachse aufweisenden Tubenrohre in Aufnahmen (5) einer abfördernden Fördereinrichtung (4) überführt werden, wobei von dieser im Bereich der nachgeordneten Station (11) zu einer Gruppe (20, 21) gruppierte Tubenrohe gemeinsam entnommen werden, und wobei eine zwischen der anliefernden Fördereinrichtung (2) und der abfördernden Fördereinrichtung (4) angeordnete Transfereinrichtung (3) vorgesehen ist, die eine Mehrzahl von gekoppelt entlang einer endlosen Bewegungsbahn mittels eines gemeinsamen Antriebs antreibbaren Transferelementen (7) zum jeweiligen Transferieren eines Tubenrohres umfasst und wobei die Geschwindigkeit der Transferelemente entlang der Bewegungsbahn variiert wird, und wobei von der anliefernden Fördereinrichtung (2) angelieferte Tubenrohre einzeln mittels jeweils eines Transferelementes der Transfereinrichtung (3, 7) zu einem jeweiligen Übernahmezeitpunkt in einem Übernahmebereich übernommen, entlang der Bewegungsbahn gefördert und auf die abfördernde Fördereinrichtung (4) transferiert werden, **dadurch gekennzeichnet dass** die Tubenrohre während eines Transportes in den Transportelementen entlang der Bewegungsbahn jeweils um eine Rotationsachse gedreht werden, wobei die Tubenrohre derart um die Rotationsachse gedreht werden, dass sich die Orientierung der Tubenrohrlängsachse im Raum, insbesondere um 90°, ändert, vorzugsweise in einer senkrecht zu einer von der Bewegungsbahn definierten Ebene angeordneten Rotationsebene, und wobei der gemeinsame Antrieb der Transferelemente (7) zum Ausgleich einer nicht äquidistanten Beabstandung der Tubenrohre auf der anliefernden Fördereinrichtung (2) derart angesteuert, insbesondere beschleunigt und/oder verlangsamt, wird, dass sich ein Übernehmendes der Transferelemente (7) trotz der nicht äquidistanten Beabstandung der Tubenrohre auf der anliefernden Fördereinrichtung (2) zum Übernahmezeitpunkt im Übernahmebereich befindet und sich zudem sämtliche gekoppelt entlang der Bewegungsbahn bewegten Transferelemente (7) zum Übernahmezeitpunkt mit der Geschwindigkeit des zu Übernehmenden der Tubenrohre entlang der Längserstreckung der anliefernden Fördereinrichtung (2) entlang der Bewegungsbahn bewegen, und dass die von den Transferelementen (7) entlang der Bewegungsbahn transportierten Tubenrohre zur Übergabe auf die Aufnahmen (5) der abfördernden Fördereinrichtung (4) gegen Abstreifermittel (10) gefördert werden.

## Claims

1. A tube body transfer system from conveying tube bodies in a tube production process from a tube body production station to a station downstream thereof, comprising a supplying conveyor device (2), which is designed for transporting spaced tube bodies in the direction of their longitudinal extension and a discharging conveyor device (4) which is designed so that with this the tube bodies grouped into one group (20, 21) in the area of the downstream station (11) can be jointly removed, wherein provided between the supplying conveyor device (2) and the discharging conveyor device (4) is a transfer device (3, 7) with a plurality of transfer elements (7) which can be driven, coupled, along a continuous movement path by a joint actuator, each, when loaded with a tube body defining a receiving axis (26) coinciding with a longitudinal axis of a tube body and preferably arranged equidistantly along the movement path, wherein assigned to the joint actuator of the transfer element (7) are control means for varying the speed of the transfer elements (7) along the path of movement, and wherein tube bodies supplied by the supplying conveying device (2) can be individually received by means of one transfer element (7) of the transfer device (3) at a respective transfer time in a transfer area (28), conveyed along the movement path transferred onto the discharging conveying device (4) wherein assigned to the transfer elements (7) are rotation means (13) for rotating the tube bodies during displacement along the continuous movement path about the respective rotation axis, wherein the rotation means, during rotation of the tube bodies about the relevant axis of rotation are designed to change the orientation of the relevant receiving axis (26) in space, in particular in such a way that the tube bodies supplied from the supplying conveying device (2) orientated in parallel to the conveying direction can be transferred at an angle, preferably perpendicularly to the direction of conveying of the supplying conveying device and/or the transfer element (7) along the path of movement of the transfer direction orientated to the discharging conveyor device (4) and wherein the control means are designed to control the joint actuator of the transfer elements (7) for compensating for a non-equidistant spacing of the tube bodies on the supplying conveyor device (2) in such a way, more particularly accelerating and/or decelerating the actuator, that a receiving transfer element (7), in spite of the non-equidistant spacing of the tube bodies on the supplying conveying device (2), is in the transfer area (28) at the time of transfer and all coupled transfer elements (7) moveable along the movement path at the time of transfer move at the speed of the one receiving the tube bodies along the longitudinal extension of the supplying conveyor device (2) along the path of movement,
**characterised in**
**that** the discharging conveyor device (4) has several receptacles (5) for the tube bodies and
**that** stripper means (10) are provided which are arranged and designed so that tube bodies transported by the transfer elements (7) along the continuous movement path can be conveyed against the stripper means (10) for transfer to the receptacles (5) of the discharging conveyor device (4).

2. The tube body transfer system according to claim 1,
**characterised in**
**that** the control means are connected in a signal conducting manner with position sensor means with which it can be detected at which point the tube bodies pass a predetermined position along the supplying conveyor device (2) and that the control means are designed to control the actuator depending on this time information and speed information about the tube body in question.

3. The tube body transfer system according to claim 2,
**characterised in**
**that** control means are designed to receive or determine the speed information on the basis of a rotary encoder signal of an actuator of the supplying conveyor device (2) and/or the supplying conveyor device or the speed sensor assigned to the tube body transportable thereon.

4. The tube body transfer system according to any one of claims 2 or 3,
**characterised in**
**that** control means are provided for calculating the transfer time multiply, in particular taking into account changing speed information.

5. The tube body transfer system according to any one of the preceding claims,
**characterised in**
**that** by means of the rotation means (13) the transfer elements (7) are rotatable about the respective rotation axis independently of each other.

6. The tube body transfer system according to any one of the preceding claims,
**characterised in**
**that** via control means the rotation means (13) have controlled, in particular electric motor rotation actuators for rotating the tube bodies about the respective rotation axis, or in that the rotation means (13) comprise the rotary joints defining the respective rotational axis provided on the transfer element for rotating the tube bodies, and that the during transportation of the tube bodies the rotary joints are adjustable along a curved path which is designed and arranged for mechanical interaction with the rotary joints for rotating the rotary joints with the tube bodies.

7. The tube body transfer system according to any one of the preceding claims,
**characterised in**
**that** a preferably horizontal rotation plane taking up the receiving axis and arranged perpendicularly to the rotation axis is arranged perpendicularly to a preferably vertical plane taking up the movement paths.

8. The tube body transfer system according to any one of the preceding claims,
**characterised in**
**that** the transfer elements (7) between a receiving position (28) for receiving the tube body from the supplying conveyor device (2) and a delivery position (30) for delivering the tube body to the discharging conveyor device (4) are exclusively movable along a straight movement path section and/or the rotation means are designed to exclusively rotate the tube bodies during transporting of the tube bodies along a straight movement path section.

9. The tube body transfer system according to any one of the previous claims,
**characterised in**
**that** the control means are designed to control the discharging conveying device (4) in such a way that at least one empty receptacle for receiving a tube body from one of the transfer elements (7) of the transfer device (3) is moved during the transfer, preferably in parallel to the direction of movement of the delivering transfer elements (7) in particular with a speed that is at a fixed ratio to the speed of the transfer elements (7).

10. The tube body transfer system according to claim 9,
**characterised in**
**that** the control means are designed to control the discharging conveyor device (4) in such a way that the empty receptacle for receiving a tube body is accelerated from a standstill, or so that the empty receptacle for delivering a tube body is accelerated from an ongoing movement or retarded.

11. The tube body transfer system according to any one of the previous claims,
**characterised in**
**that** the transfer elements (7) have holding means (14) for holding the tube bodies during transportation along the movement path, preferably through exposure to negative pressure, wherein preferably means for interrupting or reducing the exposure to negative pressure at the time of delivery of the tube bodies to the discharging conveyor device (4).

12. The tube body transfer system according to any one of the preceding claims,
**characterised in**
**that** the stripper means (10) are arranged fixed in place.

13. The tube body transfer system according to any one of the preceding claims,
**characterised in**
**that** the stripper means (10), which preferably of a curved shaped, are designed in such a way that the tube bodies, when the tube bodies move along the stripper means (10) slow down to a speed component of the tube bodies parallel to the direction of movement of an empty receptacle (5) of the discharging conveyor device (4), preferably in such a way that the tube bodies, on leaving the stripper means (10), are moved at a speed corresponding to the speed of the associated empty receptacle (5) in parallel to the empty receptacle (5).

14. The tube transfer system according to any one of the preceding claims,
**characterised in**
**that** means for suction and/or exposure to compressed air of the tube bodies to be delivered to the discharging conveyor device (4) are provided in the direction of the discharging conveyor device (4).

15. The tube body production device with a tube body transfer system (1), with a mandrel group provided at the downstream station (11) for accepting the group (20, 21) of tubes bodies removed from the discharging conveyor device (4) with the aid of removal means and with welding means allocated to the tube body production station for welding a substrate to a tube shape or with extrusion means allocated to the tube body production station for extruding a tube shape, **characterised in that** the tube body transfer system (1) corresponds to a tube body transfer system according to any one of the preceding claims.

16. A method of transferring tube bodies in a tube production process from a tube production station to a station (11) downstream thereof, more particularly with a tube body transfer system (1) according to any one of claims 1 to 14, wherein with a supplying conveyor device (2), in particular made of a plastic substrate, preferably welded or extruded, tube bodies are supplied in a spaced manner in the direction of their longitudinal extension wherein the tube bodies each having a tube longitudinal axis orientated in the direction of their longitudinal extension, are delivered to receptacles (5) of a discharging conveyor device (4), wherein from this in the area of the downstream station (11) tube bodies grouped into a group (20, 21) are jointly removed and wherein a transfer device (3) is provided between the supplying conveyor device (2) and the discharging conveyor device (4) and comprises a plurality of coupled transfer elements (7) which can be driven along a continuous movement path by means of a joint actuator, for the transferring of a tube body and wherein the speed of the transfer elements is varied along the movement path, and wherein the tube bodies supplied by the supplying conveyor device (2) are individually delivered in a transfer area by means of a transfer element of the transfer device (3, 7) at a respective transfer time, moved along the movement path and transferred to the discharging conveyor device (4),
**characterised in**
**that** during transporting in the transport elements along the movement path, the tube bodies are each turned about an axis of rotation, wherein the tube bodies are turned about the axis of rotation in such a way that the orientation of the tube body longitudinal axis in space changes, more particularly about 90°, preferably in a rotation plane arranged perpendicularly to a plane defined by the movement path, and wherein, to compensate for a non-equidistant spacing of the tube bodies on the supplying conveyor device (2), the joint actuator of the transfer elements (7) is controlled, more particularly accelerated and/or slowed down, in such a way that the receiving transfer element (7), despite the non-equidistant spacing of the tube bodies on the supplying conveyor device (2) is at the time of the transfer located in the transfer area and, in addition, all coupled transfer elements (7) moved along the movement path at the time of the transfer move at the speed of the one accepting the tube bodies along the longitudinal extension of the supplying conveyor device (2) along the movement path
and
**that** the tube bodies transported by the transfer elements (7) along the movement path for transfer to the receptacles (5) of the discharging conveyor device (4) are conveyed against stripper means (10).

## Revendications

1. Système de transfert d'enveloppes tubulaires, destiné à convoyer des enveloppes tubulaires dans un processus de fabrication de tubes d'un poste de fabrication de tubes vers un poste placé en aval de celui-ci, comprenant un dispositif de convoyage (2) fournisseur qui est conçu pour transporter des enveloppes tubulaires écartées en direction de leur extension longitudinale et un dispositif de convoyage (4) évacuateur qui est conçu de sorte que par celui-ci, dans la région du poste (11) placé en aval, des enveloppes tubulaires regroupées en un groupe (20, 21) puissent être reprises en commun, entre le dispositif de convoyage (2) fournisseur et le dispositif de convoyage (4) évacuateur étant prévu un dispositif de transfert (3, 7) avec une pluralité d'éléments de transfert (7) susceptibles d'être entraînés en étant accouplés le long d'une trajectoire sans fin, à l'aide d'un entraînement commun, définissant chacun, un axe de logement (26) coïncidant avec un axe longitudinal d'enveloppe tubulaire dans un état chargé avec une enveloppe tubulaire et placés de préférence de manière équidistante le long de la trajectoire, à l'entraînement commun des éléments de transfert (7) étant associés des moyens de commande pour faire varier la vitesse des éléments de transfert (7) le long de la trajectoire et à un moment de reprise respectif, des enveloppes tubulaires fournies par le dispositif de convoyage (2) fournisseur étant susceptibles d'être reprises une à une, dans une zone de reprise (28), à l'aide de chaque fois un élément de transfert (7) du dispositif de transfert (3), d'être convoyées le long de la trajectoire et d'être transférées sur le dispositif de convoyage (4) évacuateur, aux éléments de transfert (7) étant associés des moyens de rotation (13), destinés à faire tourner les enveloppes tubulaires pendant le déplacement le long de la trajectoire sans fin autour d'un axe de rotation respectif, lors d'une rotation des enveloppes tubulaires autour de l'axe de rotation respectif, les moyens de rotation étant conçus pour faire varier l'orientation de l'axe du logement (26) concerné dans l'espace, notamment de telle sorte que les enveloppes tubulaires fournies par le dispositif de convoyage (2) fournisseur en étant orientées à la parallèle de la direction de convoyage soient susceptibles d'être transférées sous un angle, de préférence à la perpendiculaire de la direction de convoyage du dispositif de transfert fournisseur et/ou des éléments de transfert (7), en étant orientées le long de la trajectoire du dispositif de transfert sur le dispositif de transfert (4) évacuateur et les moyens de commande étant conçus pour activer l'entraînement commun des éléments de transfert (7) pour compenser un écart non équidistant entre les enveloppes tubulaires sur le dispositif de convoyage (2) fournisseur, notamment pour accélérer et/ou pour ralentir l'entraînement de telle sorte que, malgré l'écart non équidistant entre les enveloppes tubulaires sur le dispositif de convoyage (2) fournisseur, l'un des éléments de transfert (7) à reprendre se trouve au moment de la reprise dans la zone de reprise (28) et que par ailleurs, au moment de la reprise, l'ensemble des éléments de transfert (7) déplaçables en étant accouplés le long de la trajectoire se déplacent à la vitesse de l'enveloppe tubulaire à reprendre, le long de l'extension longitudinale du dispositif de convoyage (2) fournisseur, le long de la trajectoire,
**caractérisé en ce**
**que** le dispositif de convoyage (4) évacuateur comporte plusieurs logements (5) pour les enveloppes tubulaires et en ce que des moyens de dévêtissage (10) sont prévus qui sont placés et conçus de telle sorte que des enveloppes tubulaires transportées par les éléments de transfert (7) le long de la trajectoire sans fin soient susceptibles d'être convoyées contre les moyens de dévêtissage (10) pour le transfert dans les logements (5) du dispositif de convoyage (4) évacuateur.

2. Système de transfert d'enveloppes tubulaires selon la revendication 1,
**caractérisé en ce**
**que** les moyens de commande sont reliés de manière conductrice de signaux avec des moyens capteurs de position, à l'aide desquels il est détectable à quel moment les enveloppes tubulaires passent une position prédéfinie le long du dispositif de convoyage (2) fournisseur et en ce que les moyens de commande sont conçus pour activer l'entraînement commun en fonction de ladite information de temps et d'une information de vitesse vers l'enveloppe tubulaire respective.

3. Système de transfert d'enveloppes tubulaires selon la revendication 2,
**caractérisé en ce**
**que** des moyens de commande sont conçus pour obtenir ou déterminer l'information de vitesse sur la base d'un signal d'encodeur d'un entraînement du dispositif de convoyage (2) fournisseur et/ou d'un capteur de vitesse associé au dispositif de convoyage fournisseur ou aux enveloppes tubulaires transportées sur ce dernier.

4. Système de transfert d'enveloppes tubulaires selon l'une quelconque des revendications 2 ou 3,
**caractérisé en ce**
**que** des moyens de commande sont conçus pour calculer le moment de la reprise plusieurs fois, notamment en tenant compte d'informations de vitesse qui varient.

5. Système de transfert d'enveloppes tubulaires selon l'une quelconque des revendications précédentes,
**caractérisé en ce**
**qu'**à l'aide des moyens de rotation (13), les éléments de transfert (7) sont rotatifs indépendamment les uns des autres autour de l'axe de rotation respectif.

6. Système de transfert d'enveloppes tubulaires selon l'une quelconque des revendications précédentes,
**caractérisé en ce**
**que** les moyens de rotation (13) comportent des entraînements en rotation susceptibles d'être activés par l'intermédiaire de moyens de commande, notamment à moteur électrique, destinés à faire tourner les enveloppes tubulaires autour de l'axe de rotation respectif ou en ce que les moyens de rotation (13) comprennent des articulations tournantes, définissant l'axe de rotation respectif, prévues sur les éléments de transfert, destinées à faire tourner les enveloppes tubulaires et en ce que lors du transport des enveloppes tubulaires, les articulations tournantes sont ajustables le long d'un trajet incurvé qui est conçu et placé pour la coopération mécanique avec les articulations tournantes, pour faire tourner les articulations tournantes avec les enveloppes tubulaires.

7. Système de transfert d'enveloppes tubulaires selon l'une quelconque des revendications précédentes,
**caractérisé en ce**
**qu'**un plan de rotation recevant l'axe de logement et orienté à la perpendiculaire de l'axe de rotation, de préférence horizontal est placé à la perpendiculaire d'un plan recevant les trajectoires, de préférence vertical.

8. Système de transfert d'enveloppes tubulaires selon l'une quelconque des revendications précédentes,
**caractérisé en ce**
**que** les éléments de transfert (7) sont déplaçables entre une position de reprise (28), pour reprendre les enveloppes tubulaires sur le dispositif de convoyage (2) fournisseur et une position de transfert (30), pour transférer les enveloppes tubulaires sur le dispositif de convoyage (4) évacuateur, exclusivement le long d'un segment rectiligne de la trajectoire et/ou en ce que les moyens de rotation sont conçus pour faire tourner les enveloppes tubulaires exclusivement pendant un transport des enveloppes tubulaires le long d'un segment rectiligne de la trajectoire.

9. Système de transfert d'enveloppes tubulaires selon l'une quelconque des revendications précédentes,
**caractérisé en ce**
**que** les moyens de commande sont conçus pour activer le dispositif de convoyage (4) évacuateur de telle sorte qu'au moins un logement vide soit déplacé pendant le transfert, pour reprendre une enveloppe tubulaire à partir de l'un des éléments de transfert (7) du dispositif de transfert (3), de préférence à la parallèle de la direction de déplacement de celui des éléments de transfert (7) qui transfère, notamment à une vitesse qui est en relation fixe avec la vitesse des éléments de transfert (7).

10. Système de transfert d'enveloppes tubulaires selon la revendication 9,
**caractérisé en ce**
**que** les moyens de commande sont conçus pour activer le dispositif de convoyage (4) évacuateur de telle sorte que, pour reprendre une enveloppe tubulaire, le logement vide soit accéléré à partir de l'arrêt ou de sorte que pour transférer une enveloppe tubulaire, le logement vide soit accéléré ou temporisé à partir d'un déplacement en cours.

11. Système de transfert d'enveloppes tubulaires selon l'une quelconque des revendications précédentes,
**caractérisé en ce**
**que** les éléments de transfert (7) comportent des moyens de retenue (14) pour retenir les enveloppes tubulaires pendant le transport le long de la trajectoire, de préférence par application d'une dépression, de préférence étant prévus des moyens destinés à interrompre ou à réduire l'application de la dépression lors du transfert des enveloppes tubulaires sur le dispositif de convoyage (4) évacuateur.

12. Système de transfert d'enveloppes tubulaires selon l'une quelconque des revendications précédentes,
**caractérisé en ce**
**que** les moyens de dévêtissage (10) sont placés de manière stationnaire.

13. Système de transfert d'enveloppes tubulaires selon l'une quelconque des revendications précédentes,
**caractérisé en ce**
**que** les moyens de dévêtissage (10) présentant une forme de préférence curviligne sont conçus de telle sorte qu'ils freinent les enveloppes tubulaires lors d'un déplacement des enveloppes tubulaires le long des moyens de dévêtissage (10) à une composante de vitesse des enveloppes tubulaires, à la parallèle de la direction de déplacement d'un logement (5) vide du dispositif de convoyage (4) évacuateur, de préférence de telle sorte que, lorsqu'elles quittent les moyens de dévêtissage (10), les enveloppes tubulaires soient déplacées à une vitesse correspondant à la vitesse du logement (5) vide associé, à la parallèle du logement (5) vide.

14. Système de transfert d'enveloppes tubulaires selon l'une quelconque des revendications précédentes,
**caractérisé en ce**
**que** des moyens destinés à aspirer des enveloppes tubulaires qui doivent être transférées sur le dispositif de convoyage (4) évacuateur et/ou à leur appliquer de l'air comprimé sont prévus dans la direction du dispositif de convoyage (4) évacuateur.

15. Dispositif de fabrication d'enveloppes tubulaires avec un système de transfert (1) d'enveloppes tubulaires, avec un groupe de mandrins prévu sur le poste (11) placé en aval, destiné à recevoir le groupe (20, 21) d'enveloppes tubulaires repris sur le dispositif de convoyage (4) évacuateur à l'aide de moyens de reprise et avec des moyens de soudage associés au poste de fabrication d'enveloppes tubulaires, destinés à souder un substrat en une forme tubulaire ou avec des moyens d'extrusion associés au poste de fabrication d'enveloppes tubulaires, destinés à extruder une forme tubulaire, **caractérisé en ce que** le système de transfert (1) d'enveloppes tubulaires correspond à un système de transfert d'enveloppes tubulaires selon l'une quelconque des revendications précédentes.

16. Procédé destiné à transférer des enveloppes tubulaires dans un processus de fabrication de tubes d'un poste de fabrication d'enveloppes tubulaires vers un poste (11) placé en aval de celui-ci, notamment avec un système de transfert (1) d'enveloppes tubulaires selon l'une quelconque des revendications 1 à 14, lors duquel par un dispositif de convoyage (2) fournisseur, des enveloppes tubulaires conçues notamment en un substrat en matière plastique, de préférence soudées ou extrudées sont fournies avec un écart dans la direction de leur extension longitudinale et les enveloppes tubulaires présentant chacune un axe longitudinal de tube orienté dans la direction de leur extension longitudinale sont transférées dans des logements (5) d'un dispositif de convoyage (4) évacuateur, dans la zone du poste (11) placé en aval, des enveloppes tubulaires regroupées en un groupe (20, 21) étant reprises en commun par celui-ci et un système de transfert (3) placé entre le dispositif de convoyage (2) fournisseur et le dispositif de convoyage (4) évacuateur étant prévu, qui comprend une pluralité d'éléments de transfert (7) susceptibles d'être entraînés en étant accouplés le long d'une trajectoire sans fin, à l'aide d'un entraînement commun, pour le transfert respectif d'une enveloppe tubulaire et lors duquel on fait varier la vitesse des éléments de transfert le long de la trajectoire et lors duquel, à un moment de reprise respectif, des enveloppes tubulaires fournies par le dispositif de convoyage (2) fournisseur sont reprises une à une dans une zone de reprise, à l'aide de chaque fois un élément de transfert du système de transfert (3, 7), sont convoyées le long d'une trajectoire et sont transférées sur le dispositif de convoyage (4) évacuateur,
**caractérisé en ce**
**que** pendant un transport dans les éléments de transport, le long de la trajectoire, les enveloppes tubulaires sont tournées chacune autour d'un axe de rotation, les enveloppes tubulaires étant tournées autour de l'axe de rotation de telle sorte que l'orientation de l'axe longitudinal des enveloppes tubulaires dans l'espace varie, notamment de 90°, de préférence dans un plan de rotation placé à la perpendiculaire du plan défini par la trajectoire et pour compenser un écart non équidistant entre les enveloppes tubulaires sur le dispositif de convoyage (2) fournisseur, l'entraînement commun des éléments de transfert (7) étant activé, notamment accéléré et/ou ralenti de telle sorte que, malgré l'écart non équidistant entre les enveloppes tubulaires sur le dispositif de convoyage (2) fournisseur, au moment de la reprise, l'un des éléments de transfert (7) qui reprend se trouve dans la zone de reprise et que par ailleurs, au moment de la reprise, tous les éléments de transfert (7) déplacés en étant accouplés le long de la trajectoire se déplacent le long de la trajectoire à la vitesse de celle parmi les enveloppes tubulaires qui doit être reprise, le long de l'extension longitudinale du dispositif de convoyage (2) fournisseur
et
en ce que pour le transfert sur les logements (5) du dispositif de convoyage (4) évacuateur, les enveloppes tubulaires transportées par les éléments de transfert (7) le long de la trajectoire sont convoyées contre des moyens de dévêtissage (10).
